(19)

**Europäisches Patentamt**

**European Patent Office**

**Office européen des brevets**

(11)  **EP 4 498 183 A1**

(12)  **EUROPEAN PATENT APPLICATION**

(43) Date of publication:
29.01.2025  Bulletin 2025/05

(21) Application number: 23187792.9

(22) Date of filing: 26.07.2023

(51) International Patent Classification (IPC):
**G05B 13/02** (2006.01)

(52) Cooperative Patent Classification (CPC):
**G05B 13/027**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventor: **The designation of the inventor has not
yet been filed**

(74) Representative: **BASF IP Association**
**BASF SE**
**GBI - Z078**
**67056 Ludwigshafen (DE)**

(54)  **A SYSTEM AND A COMPUTER IMPLEMENTED METHOD FOR A DISTRIBUTED PRODUCTION
ENVIRONMENT**

(57)  The disclosure relates to providing plant-based data for re-training a pre-trained transformer-based model for production. The disclosure further relates to using the trained transformer-based model for controlling and/or monitoring distributed production environment such as chemical production in a safe manner.

EP 4 498 183 A1

**Description**

Technical Field

The claimed invention relates to the field of computer assisted production such as chemical production.

Background Art

ISO/IEC 23053:2022(en), ISO/IEC TR 24372:2021(en), ISO/IEC 22989, ISO/IEC 23053 define standards in the field of Artificial Intelligence, AI and machine learning, ML. The definition of big data is given in ISO/IEC 20546:2019(en) Information technology - Big data. The definition of "data quality" is, for example, given in ISO/IEC 20546:2019(en), ISO 8000-66:2021 (en)/Data quality, ISO/IEC DIS 5259-1 (en)

WO2020165045 (A1) is directed at determining operating conditions in chemical production plants. In WO2020165045 (A1), systems and methods for determining an operating condition of a chemical production plant including at least one catalytic reactor are provided. In WO2020165045 (A1), via a communication interface operating data and a catalyst age indicator are received. In WO2020165045 (A1), at least one target operating parameter for the operating condition of a scheduled production run or a current production run are determined. In WO2020165045 (A1), the at least one target operating parameter for the operating condition may be used for monitoring and/or controlling the chemical production plant.

WO2021116123 (A1) is directed at a system for monitoring and/or controlling one or more chemical plant(s), wherein the system comprises a first processing layer associated with the chemical plant and communicatively coupled to a second processing layer, wherein the first processing layer and the second processing layer are configured in a secure network, wherein the first processing layer provides process or asset specific data of the chemical plant to the second processing layer, wherein the second processing layer is configured to contextualize process or asset specific data to generate plant specific data and to provide plant specific data of one or more chemical plant(s) to an interface to an external network.

WO2021156157 (A1) is directed at industrial plant monitoring. WO2021156157 (A1) describes a method comprising a plurality of sensors, and one or more functionally connected processing units, the method comprising: providing, at any of the one or more processing units, time-series residual data of a sensor object; the sensor object being a group of at least some of the sensors from the plurality of sensors, and wherein the residual data comprises, for each of the sensors of the sensor object, a residue signal which is a difference between the sensor's measured output and the sensor's expected output, monitoring, via any of the one or more processing units, a level signal; wherein the level signal is indicative of a collective time-based variation of the time-series residual data, monitoring, via any of the one or more processing units, an association signal; wherein the association signal is indicative of the variation and/or association structure of the time-series residual data, generating, via any of the one or more processing units, an anomaly event signal when at a given time a value of the level signal and/or a value of the association signal changes from an expected value of the respective signal at or around that time. WO2021156157 (A1) further describes a monitoring and/or control system for a plant comprising a plurality of sensors.

"Attention Is All You Need" by Vaswani et al., 31st Conference on Neural Information Processing Systems (NIPS 2017), Long Beach, CA, USA (6 Dec 2017, arXiv:1706.03762v5) describes a new mechanism in machine learning comprising a transformer component (a transformer based model).

Problem

It may be inferred from WO2020165045 (A1) that the use of plant metadata indicative of physical plant layout for transformation of measured quantities (so that they are independent of the physical plant layout) provides a method for determining operating conditions in a chemical production plant including at least one catalytic reactor. It may be inferred that the method and system of WO2020165045 (A1) allows for robust, stable and reliable reactor operation and enhances process control in catalyst-based production plants.

It may be inferred from WO2021116123 (A1) that chemical production environment comprising cloud connectivity for chemical plants may have heightened security concepts. In such a secure chemical production environment as shown in fig. 1 of WO2021116123 (A1), the second layer 16 and the external processing layer 30 may allow for APIs to access data of plants, to orchestrate metadata of data storage, transfer and calculation, to provide interactive plant data working environment for users, e.g. operators and to verify and improve data quality.

It may be inferred from WO2021156157 (A1) that an event-based trigger for providing data stream for a neural network may be used for industrial plan monitoring. It may be inferred from WO2021156157 (A1) that a ML model retraining may be triggered automatically in response to the model performance going below a minimum performance threshold of the model. It may be also inferred from WO2021156157 (A1) that the sensor object model retraining may be automatically triggered in response to a change in the process parameters, such as a user input to change the plant output, for example increase or decrease in production.

Thus, from the cited prior art it may be inferred that chemical production is typically data-heavy and requires computer assisted data analysis of intense multi-parameter data flows for improving monitoring and/or control of production.

In view of the above, a problem associated with the prior art may be formulated as how to improve control and/or monitoring of a distributed production environment.

Given the current developments in artificial intelligence, advanced manufacturing techniques comprising artificial intelligence, AI may be used for improving chemical production. However, there are currently a number of challenges associated with potential use of AI for production. One of the problems associated with use of AI for production is how to generate training data suitable for (re)training a pre-trained transformer-based model for monitoring and/or control of a distributed production environment, particularly, chemical production. Another problem associated with the prior art relates to using an AI model comprising a transformer. In particular, the problem related to using the AI model for a distributed production such as chemical production may be formulated as to how to integrate said AI model in a distributed production environment, particularly, chemical production (that may comprise heightened security/safety concerns).

Solution

A transformer-based model may be trained on big data (e.g., unspecific text and image data). Trained transformer-based models have improved capabilities for predicting data patterns such as patterns in natural languages. The improved capabilities are typically attributed to large number of parameters obtained by said training. For example, transformer-based models such as OpenAI GPT may include 117 million parameters (GPT-1), 1.5 billion parameters, 175 billion parameters (GPT-3), 170 trillion parameters (GPT-4). Said parameters allow said GPT models generating improved data output as compared to other models such as recurrent neural networks (RNNs) or long short-term memory (LSTM) networks that do not comprise a transformer component.

RNN and LSTM were used for analyzing text data before the emergence of transformer architectures. Transformer-based large language models have been found to outperform RNNs and LSTMs for natural language processing, NLP. Particularly, transformer-based architectures have advantages over RNNs and LSTMs due to long-range dependencies and parallelization of computation. Furthermore, transformer-based architectures may be pre-trained on larger text-based datasets and fine-tuned (re-trained) for specific tasks with smaller (labeled) datasets. This transfer learning approach has led to state-of-the-art results on numerous NLP tasks, surpassing RNNs and LSTMs.

Said fine-tunning or re-training may allow using the outstanding analytic capabilities of pre-trained transformer-based models for analyzing data patterns other than patterns in natural languages.

Thus, due to outstanding capabilities of generative transformer based models in analyzing data patters, one problem associated with the prior art (e.g., how to improve production) may be solved by using a pre-trained transformer-based models for distributed production such as chemical production. The problem associated with the prior art of how to obtain data suitable for re-training a pre-trained transformer-based model for said production may be solved by providing historic production data accumulated over more than 150 years.

The amount of training data necessary to fine-tune a pre-trained transformer-based model may depend on the specific task, the complexity of the model, and the desired performance level. In many cases, transformer models can be fine-tuned (re-trained) with smaller amounts of purpose-specific training data as compared to the size of pre-training dataset. However, if the specific application is very different from the pretraining data, re-training a pre-trained transformer-based model may require larger datasets as compared to the scenario when the specific application is similar to the pre-training data. For example, text classification or sentiment analysis may require few hundred MB to a few GB of labeled data. Machine translation may require tens to hundreds of GB of text data for re-training. Question-answering may require several GBs of training data for re-training a pre-trained transformer-based model.

With better quality of training data, the amount of training data may be reduced (the definition of the term "data quality" is, for example, given in ISO/IEC 20546:2019(en), ISO 8000-66:2021 (en)/Data quality, ISO/IEC DIS 5259-1(en)). Pre-processing of data for generating high quality training data may involve labeling data, removing noise, irrelevant information and/or alike. Thus, pre-processing data for generating high quality training data may be beneficial for more efficient re-training.

Larger amounts of training data may allow fine tuning or re-training pre-trained transformer-based models with more parameters. For example, in order to fine-tune Distill BERT model less training data may be required as compared to the amount of data necessary for fine-tunning GPT-4 model. Larger amount of said parameters may provide improved capabilities in data analysis (e.g., GPT-4 is more powerful in analyzing data patterns than GPT-3).

Pre-trained transformer based models are known in the prior art, for example, ChatGPT (GPT-2, GPT-3, GPT-3-5-turbo, GPT-4), Davinci, BERT (Bidirectional Encoder Representations from Transformers), DistilBERT, Transformer-XL, XLNet (eXtreme Language understanding Network), T5 (Text-to-Text Transfer Transformer), RoBERTa (Robustly Optimized BERT approach), ELECTRA (Efficiently Learning an Encoder that Classifies Token Replacements Accurately), Reformer, Longformer, DeBERTa (Decoding-enhanced BERT with disentangled attention). The properties, and thus, output data of said transformer-based models may vary for the same input data due to differences in architectures and/or pre-training datasets. Thus, one or more of said transformer-based models (GPT-2, GPT-3, GPT-3-5-turbo, GPT-4, Davinci, BERT, DistilBERT, Transformer-XL, XLNet, T5, RoBERTa, ELECTRA, Reformer, Longformer, DeBERTa) may be used as one alternative of a pre-trained transformer-based model for a technical purpose or one or more of said models may be used in a combination for a technical purpose to provide a plurality of data outputs for complimentary data analysis.

Alongside with unsurpassed advantages, there are also risks known in the prior art associated with using pre-trained transformer-based models due to that said models may generate spurious or even harmful results. Said problems related to safety may be solved by safe integration of said transformer-based models in a distributed production environment as described in the embodiments of the current application.

In particular, the solution to the problem related to providing training data suitable for re-training a pre-trained transformer based model for production such as chemical production) may include providing historic plant-based data. Since the applicant has generated and stored production data (plant based data) for more than 150 years (as, for example, disclosed in WO2021156157 A1, WO2020165045 A1, WO2021116123 A1), the problem with providing training plant based data required to retrain a pre-trained transformer-based model may be solved by providing the historic production data (plant-based data) from one or more databases of one or more distributed production facilities of the applicant.

The solution may further comprise re-training a pre-trained transformer-based model for providing (releasing) a trained transformer-based model suitable for production. The trained transformer-based model may then be used for controlling and/or monitoring distributed production environment such as chemical production.

The solution may also comprise providing a transformer-based model and pre-training said model on generic data such as text-based data (any type of data that may be converted to text data). The pre-training data may also comprise publicly available data associated with production, such as, for example, data available on websites of production facilities.

Using any other large language model (a foundation model such as a transformer-based model) that may be pre-trained on a big dataset (e.g., unspecific, publicly available dataset) and trained (fine-tunned, re-trained) on a smaller dataset (e.g., specific dataset, e.g., production data) in order for the trained model to be suitable for controlling and/or monitoring production is also withing the scope of the claimed invention.

Advantageous technical effects

A pre-trained transformer-based model pretrained on larger datasets (publicly available data, unspecific data) and re-trained on smaller datasets (i.e., plant-based datasets) is superior in analyzing plant-based data patterns, identifying anomalies in the data patterns, and based on the analysis of the data patterns, generating operating instructions for improving controlling and/or monitoring of distributed production such as chemical, pharmaceutical, biotechnological production.

Providing plant-based training data enables re-training a pre-trained transformer-based model for production.

Pre-processing raw plant data (e.g., sorting, filtering, labeling, structuring data) for generating training plant-based data improves the quality of training data, and thus, the training efficiency in that less training data and computing power may be required for re-training or fine-tunning a pre-trained transformer-based model.

A one or more alternative pre-trained transformer-based models such as disclosed the prior art or a variation of those may be used instead or in addition to the claimed pre-trained transformer-based model as long as said one or more models are re-trainable for production. Said one or more alternative or additional models may have different properties based on different set of parameters obtained during pre-training. Thus, said one or more additional or alternative models may be of interest as a complimentary or an alternative component of the claimed invention for analyzing data patterns in plant-based input data.

Trigger based re-training of a trained transformer-based model, scheduled or continuous re-training may improve the performance of the model in that the model may be trained on the most up to date data. A feedback score may be provided as a quality indicator of generated output data.

Using the trained transformer-based model for controlling and/or monitoring production such as chemical production may improve the overall efficiency of production since many aspects causing inefficient production may be identified by the model by analyzing data patters in input data based on plant data. Based on the analysis, a solution of how to improve the production may be generated by the model in a format of operating instructions (machine-readable instructions) for controlling and/or monitoring production. Reviewing said operating instructions may provide safe integration of the model in a distributed production environment such as chemical production.

# EP 4 498 183 A1

Summary

The claimed invention is defined by the features of independent claims. Additional embodiments are defined by the features of the dependent claims. The problems inherent to the prior art are solved by the subject matter of the independent claims. Additional synergetic technical effects are provided by the features of dependent claims.

Description of the Drawings

In the following, the present disclosure is further described with reference to the enclosed figures. The same reference numbers in the drawings and this disclosure are intended to refer to the same or like elements, components, and/or parts.

FIG. 1      illustrates a distributed production environment such as one or more chemical plants.

FIG. 2A      illustrates an operating system of the distributed production environment of FIG. 1.

FIG. 2B      illustrates training a pre trained transformer-based model on plant data generat-ed by the production environment of FIG. 1.

FIG. 2C      illustrates an embodiment of using a trained transformer-based model for con-trolling and/or monitoring the distributed production environment shown in FIG. 1.

FIG. 3      illustrates a pre-processing engine of the operating system shown in FIG. 2.

FIG. 4      illustrates plant data structure generated by the production environment of FIG. 1.

FIG. 5      illustrates data structure from an operator.

FIG. 6      illustrates further details of re-training a pre-trained transformer-based model for production in addition to the embodiments in FIGs. 2a and 2b.

FIG. 7      illustrates contextualization of prompts.

FIG. 8      illustrates trigger-based re-training of a trained transformer-based model when the model is in use for production.

FIG. 9      illustrates an embodiment of training an embedding layer.

FIG. 10A      illustrates an embodiment of a transformer encoder architecture.

FIG. 10B      illustrates an embodiment of a transformer decoder architecture.

FIG. 10C      illustrates an embodiment of a transformer encoder-decoder architecture.

FIG. 11      illustrates an embodiment of training and/or deploying the transformer encoder, the transformer decoder and/or the transformer encoder-decoder.

FIG. 12      illustrates an embodiment of input embedding.

Detailed Description

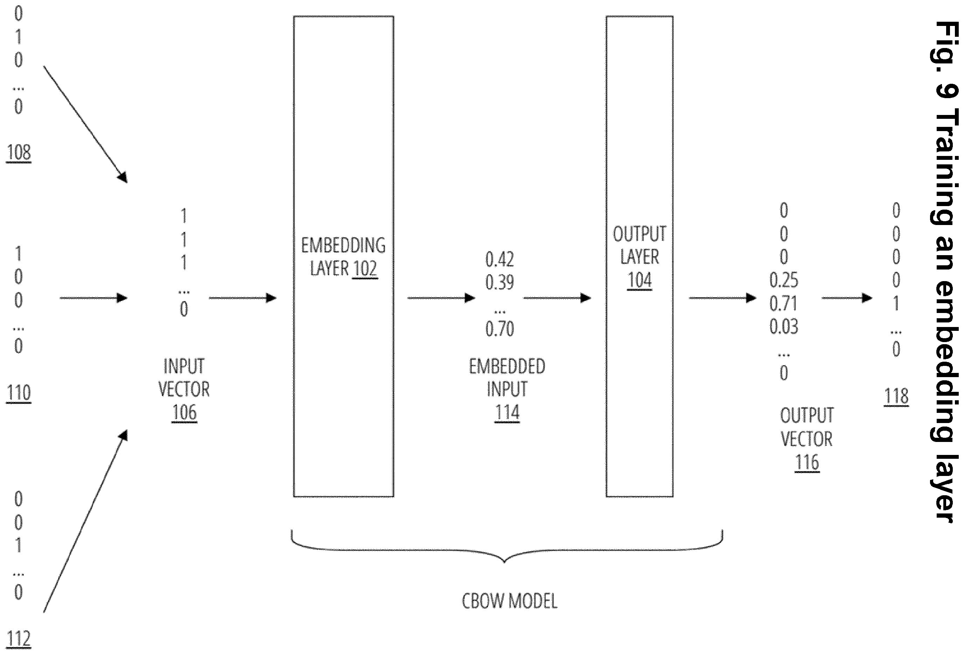

A transformer-based model (generative artificial intelligence, AI model) in the context of the current application may refer to a foundation model (a machine learning, ML model) that comprises a transformer component such as described in FIGs. 9-12.

Generative artificial intelligence, AI may refer to a computer program that may generate output as, for example, described in ISO/IEC 23053:2022(en), ISO/IEC 23053:2022(en), ISO/IEC TR 24372:2021(en), ISO/IEC 22989, ISO/IEC 23053, ISO/IEC DIS 5259-1(en), ISO/IEC 24661:2023(en). A generative AI program may comprise a ML model such as a transformer-based model (generative pretrained transformer, GPT model). The generative pretrained transformer model (or simply, the transformer based model) may also be referred to as a foundation model.

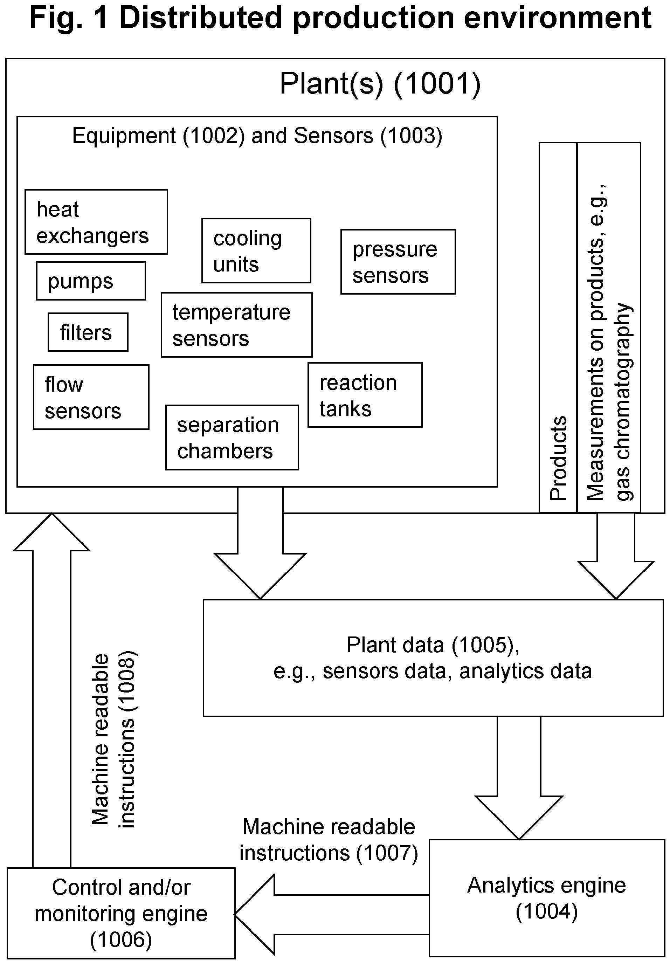

An "engine" in the context of FIGs. 1-8 comprises at least one computer processor.

A "computer interface" in the context of the current disclosure may be, e.g., a graphical user interface, an application programming interface, a web-based interface.

Terms "training", "re-training" and "fine tuning" may be used interchangeably in the context of the current application when a pre-trained transformer-based model pre-trained for a first purpose (e.g., analyzing unspecific text-based data) is trained/re-trained/fine-tuned for a second purpose (e.g., production). A trained transformer-based model suitable for the second purpose may be further re-trained/fine-tunned for the second purpose in order to improve output data provided by the model.

"Distributed production environment" or "plant(s)" may refer, without limitation, to any technical infrastructure that is used for an industrial purpose of manufacturing, producing or processing of one or more products, i.e., a manufacturing or production process or a processing performed by the distributed production environment. The distributed production environment may be one "plant" (infrastructure) having distributed units for production. The distributed production environment may be one technical infrastructure (plant) comprising distributed operations. The distributed production environment may be more than one plant distributed in space and/or directed at distributed operations. The distributed production environment may be one or more of a chemical plant, a process plant, a pharmaceutical plant, a fossil fuel processing facility such as an oil and/or a natural gas well, a refinery, a petrochemical plant, a cracking plant, and the like. The distributed production environment may even be any of a distillery, a treatment plant, or a recycling plant. The distributed production environment may be a combination of any of the examples given above or their likes.

The "product" produced by the distributed production environment may, for example, be any physical product, such as a chemical, a biological, a pharmaceutical, a food, nutritional, a beverage, a textile, a metal, a plastic, a semiconductor, cosmetic or even any of their combination. Additionally, or alternatively, the product may be a service product, for example, recovery or waste treatment such as recycling, chemical treatment such as breakdown or dissolution into one or more chemical products. Some non-limiting examples of the chemical product are, organic or inorganic compositions, monomers, polymers, foams, pesticides, herbicides, fertilizers, feed, nutrition products, precursors, pharmaceuticals or treatment products, or any one or more of their components or active ingredients. In some cases, the chemical product may be a product usable by an end-user or consumer, for example, a cosmetic or pharmaceutical composition. The chemical product may be a product that is usable for making further one or more products, for example, the chemical product may be a synthetic foam usable for manufacturing soles for shoes, or a coating usable for automobile exterior. The chemical product may be in any form, for example, in the form of solid, semi-solid, paste, liquid, emulsion, solution, pellets, granules, powder.

The distributed production environment may comprise equipment or process units such as any one or more of a heat exchanger, a column such as a fractionating column, a furnace, a reaction chamber, a cracking unit, a storage tank, an extruder, a pelletizer, a precipitator, a blender, a mixer, a cutter, a curing tube, a vaporizer, a filter, a sieve, a pipeline, a stack, a filter, a valve, an actuator, a mill, a transformer, a conveying system, a circuit breaker, a machinery e.g., a heavy duty rotating equipment such as a turbine, a generator, a pulverizer, a compressor, an industrial fan, a pump, a transport element such as a conveyor system, a motor, etc.

Further, the distributed production environment may typically comprise a plurality of sensors and at least one control system for controlling at least one parameter related to the process, or process parameter, in the plant. Such control functions are usually performed by the control system or controller in response to at least one measurement signal from at least one of the sensors. The controller or control system of the plant may be implemented as a distributed control system, DCS, and/or a programmable logic controller, PLC. The plurality of sensors may be distributed in the distributed production environment for monitoring and/or controlling purposes. Such sensors may generate a large amount of data. The sensors may or may not be considered a part of the equipment. Thus, production, such as chemical and/or service production, may be a data heavy environment. A distributed production environment may produce a large amount of process related data.

Said sensors may be used for measuring one or more process parameters and/or for measuring operating conditions of said equipment or parameters related to the equipment or the process units. For example, the sensors may be used for measuring a process parameter such as a flowrate within a pipeline, a level inside a tank, a temperature of a furnace, a chemical composition of a gas, etc., and some sensors can be used for measuring vibration of a pulverizer, a speed of a fan, an opening of a valve, a corrosion of a pipeline, a voltage across a transformer, etc. The difference between these sensors cannot only be based on the parameter that they sense, but it may even be the sensing principle that the respective sensor uses. Some examples of sensors based on the parameter that they sense may comprise: temperature sensors, pressure sensors, radiation sensors such as light sensors, flow sensors, vibration sensors, displacement sensors and chemical sensors, such as those for detecting a specific matter such as a gas. Examples of sensors that differ in terms of the sensing principle that they employ may for example be: piezoelectric sensors, piezoresistive sensors, thermocouples, impedance sensors such as capacitive sensors and resistive sensors, and so forth.

The distributed production environment may be a plurality of distributed production environments. The plurality of distributed production environments may be coupled such that the distributed production environments forming the plurality of distributed production environments may share one or more of their value chains, educts and/or products. The plurality of distributed production environments may also be referred to as a compound, a compound site, a Verbund or a Verbund site. Such Verbund sites or chemical parks may be or may comprise one or more distributed production environments, where products manufactured in the at least one distributed production environment may serve as a feedstock for another distributed production environment.

"Production" refers to any industrial process which when, used on, or applied to an input component provides an output product different from the input product. The production may thus be any manufacturing or treatment process or a combination of a plurality of processes that are used for obtaining the product as defined above. The production process may even include packaging and/or stacking of one or more of the products.

The production process may be continuous, in campaigns, for example, when based on catalysts which require recovery, it may be a batch chemical production process. One main difference between these production types is in the frequencies occurring in the data that is generated during production. For example, in a batch process the production data extends from start of the production process to the last batch over different batches that have been produced in that run. In a continues setting, the data is more continuous with potential shifts in operation of the production and/or with maintenance driven down times. Thus, the required data analysis may be different based on the differences in the data flow, batch or continuous. For example, scheduled re-training of a trained transformer-based model may be advantageous for batch data flows, while continuous re-training of a trained transformer-based model may be advantageous for continuous data flows.

The terms "plant data" or "plant-based data" may be used interchangeably and may relate to production data (e.g., properties of a product), process data (process parameters), operating conditions. Plant based data may refer to data comprising values, for example, numerical or binary signal values, measured during the production process, for example, via the one or more sensors. The process data may be time-series data of one or more of the process parameters and/or the equipment operating conditions. Typically, the plant-based data may comprise temporal information of the process parameters and/or the equipment operating conditions, e.g., the data contains time stamps for at least some of the data points related to the process parameters and/or the equipment operating conditions. The plant-based data may comprise time-space data, i.e., temporal data and the location or data related to one or more equipment zones that are located physically apart, such that time-space relationship can be derived from the data.

"Process parameters" may refer to any of the production process related variables, for example any one or more of temperature, pressure, time, level, etc. relevant for producing the product as defined above.

The above definitions of a distributed production environment, products produced by the distributed production environment, production processes, the data generated by the production environment and the control of the production are mere examples and should not be construed as limiting. It may be understood that the system and the method of the claimed invention may apply to any kind of production producing a product and generating multi-parameter data flows related to production. Any type of plant-based data may be pre-processed by a pre-processing unit to generate the required plant-based training data (labeled data, (pre)structured data, filtered data, data in the format of numbers and/or text, etc.) or plant-based input data suitable for re-training a pre-trained transformer-based model or using a trained transformer-based model for production, respectively. Thus, the distributed production environment should be construed broadly as a technical environment producing a product (a physical product and/or a service associated with a product; a product may even be data product) and while producing said product generating, by said technical environment, multi-parameter production related data flows (plant-based data).

FIG. 1 illustrates a distributed production environment such as one or more chemical plants.

A distributed production environment may comprise equipment 1002 and sensors 1003 generating one or more sensor related data flows. The distributed production environment may produce one or more products as defined above, wherein properties of said one or more products may be measured, extracted or calculated generating one or more product related data flows. Plant data 1005 (plant-based data) may comprise data obtained from each of said one or more data flows.

Equipment 1002 may be any equipment of a distributed production environment such as pumps, heat exchangers, valves, reaction tanks, separation chambers and/or alike.

Sensors 1003 may be any kind of sensors of a distributed production environment such temperature sensor, flow sensor, pressure sensor and/or alike.

One or more products produced by the distributed production environments may be any type of products as described above. Properties of the products may be measured by, for example, gas chromatography.

Plant data 1005 may be stored in a database, e.g., as historic data. Plant data 1005 may be provided to the pre-processing engine that pre-process the data and provides plant-based input data to an analytics engine 1004 that may analyze the plant-based input data and generate machine readable instructions 1007 for control and/or monitoring engine 1006. Generation of the machine-readable instructions 1007 may be automatic (i.e., without involving an operator) by the analytics engine 1004 based on the analysis of the input plant data. For example, the analytics engine 1004 may continuously receive input plant data and may analyze said data in a continuous mode. When an anomaly occurs, the analytics engine may generate machine readable instructions 1007 for the control and/or monitoring engine to remove the anomaly. The analytics engine may identify solutions for improving production efficiency by analyzing plant-based input data on the background of production processes and may send machine readable instructions 1007 to the control and/or monitoring engine for improving production. The control and/or monitoring engine 1004 may display a push notification to an operator to review the instructions 1007 and based on the review may generate machine readable instructions 1008. The control system, based on the machine-readable instructions 1008, may change the operating parameters of one or more pieces of equipment 1002. Reviewing said machine readable instructions may allow for safe integration of the trained transformer based model in the distributed production environment such as chemical production.

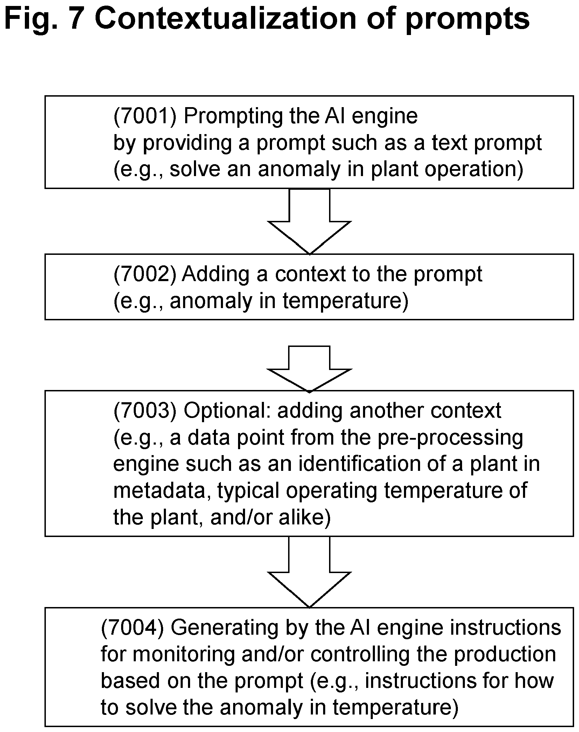

Alternatively, or in addition to the automatic generation of machine-readable instructions 1007 by the analytics engine, an operator may prompt the analytics engine 1004 to provide machine-readable instruction 1007 based on a prompt as described, for example, in the context of FIG. 7.

Machine readable instructions 1007 may be used by an operator for controlling and/or monitoring of one or more production operations of the distributed production environment.

Machine readable instructions 1007 may comprise operating instructions for production such as machine-readable instructions for controlling equipment 1002 and/or machine-readable instructions for monitoring equipment 1002 and/or sensors 1003. Machine readable instructions 1007 may comprise operating instructions for an operator for controlling and/or monitoring the distributed production environment, wherein the operator may be a human based operator, computer-based operating system or a hybrid system comprising a human operator and a computer-based assistance system.

An operator may review the machine-readable instructions 1007 and, based on the review, may generate machine readable instructions 1008 for controlling equipment 1002 and/or sensors 1003. An operator may prompt the analytics engine 1004 to provide operating instructions (machine-readable instructions 1007) based on a prompt, a query, a context and/or alike as illustrated in FIG. 7.

An operator may be a human operator reviewing the machine-readable instructions 1007. An operator may be a human operator having a computer-based assisted system for reviewing the machine-readable instructions 1007. An operator reviewing the machine-readable instructions 1007 may be a computer-based system based on a computer program comprising a set of instructions for reviewing machine readable instructions 1007.

The control system of the distributed production environment may comprise one or more computing units that may be able to manipulate one or more process parameters related to the production process by controlling one or more of the actuators or switches and/or end effector units, for example via manipulating one or more of the equipment operating conditions. The controlling is typically done in response to the one or more signals retrieved from the equipment.

The control and monitoring engine may comprise one or more computer processors for revising machine-readable instructions 1007 and generating machine readable instructions 1008 for the control system of the distributed production. The control system of the distributed production, based on the machine-readable instructions 1008, may adjust the equipment operating conditions such that the adjusted process parameters and/or equipment operating conditions result in a controlled product (such as a chemical product) that has one or more required or pre-determined properties or performance parameters. Production can thus be controlled on-the-fly whilst ensuring that the equipment operating conditions are adapted to undesired variations in the process parameters.

It may be understood that control and monitoring of distributed production environment in general relates to controlling equipment and/or production lines for producing a product by sending machine readable instructions to the production environment. A product should be construed broadly as described above. As a further example, a product may even be a data product, and/or a data service product provided by the trained transformer based model trained on plant based training data.

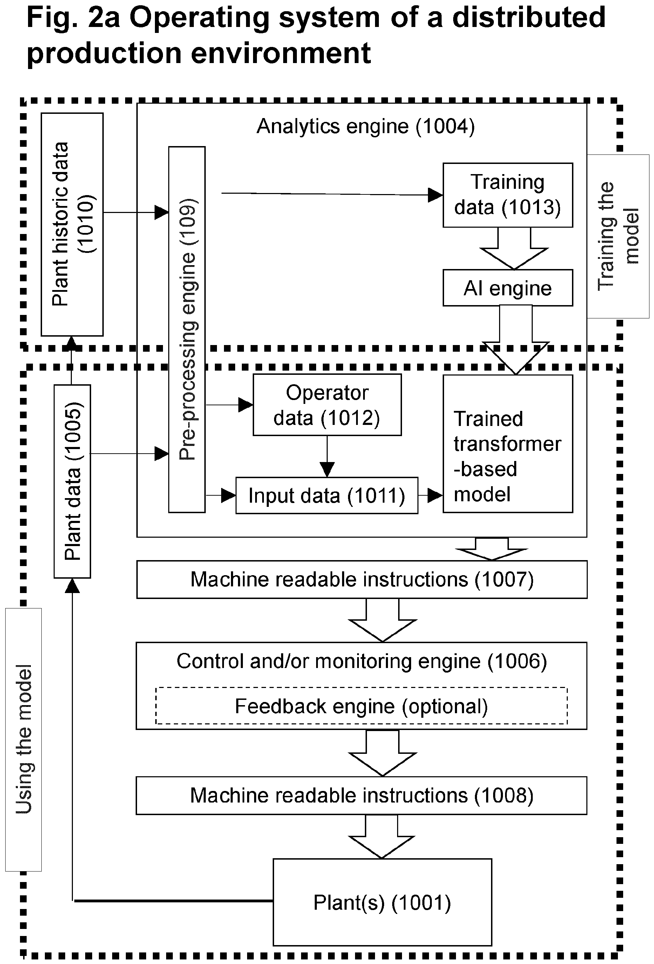

The transformer-based model (first ML model) operated by the AI engine as described in the context of FIGs. 2a, 2b, 9-12 (the first ML model) may be integrated via a computer interface (e.g., an API, a GUI, a web application) with another computer program, such as a second ML model, wherein the second ML may comprise a different algorithm (e.g., a classical ML not based on a transformer architecture, a variation of the transformer based architecture of the first model or alike) and/or the second ML may comprise the same architecture as the first model but the second model may be trained on a different dataset.

For example, a second ML model may be a data driven model such as the one disclosed in WO2021156157 (A1) that may be integrated with the first model (transformer based model) via an API, GUI or web-based interface. The second ML model may be used for pre-processing of raw plant-based data to generate plant based training data. Pre-processing of the raw data may involve removing noise, filtering data, labeling data, sorting data, converting raw data into a different format, converting operator data into a different format better suitable for the first ML model (transformer based model), and or alike. Said pre-processing of the raw data may also be done by a computer program based on a set of computers implemented instructions (e.g., a set of programming instructions, filters, labels, mathematical steps and/or alike not comprising a ML model). Pre-processing of raw plant-based data may improve the quality of training or input data based on the raw data and may reduce the computing power required for training/using the first ML model (transformer-based model).

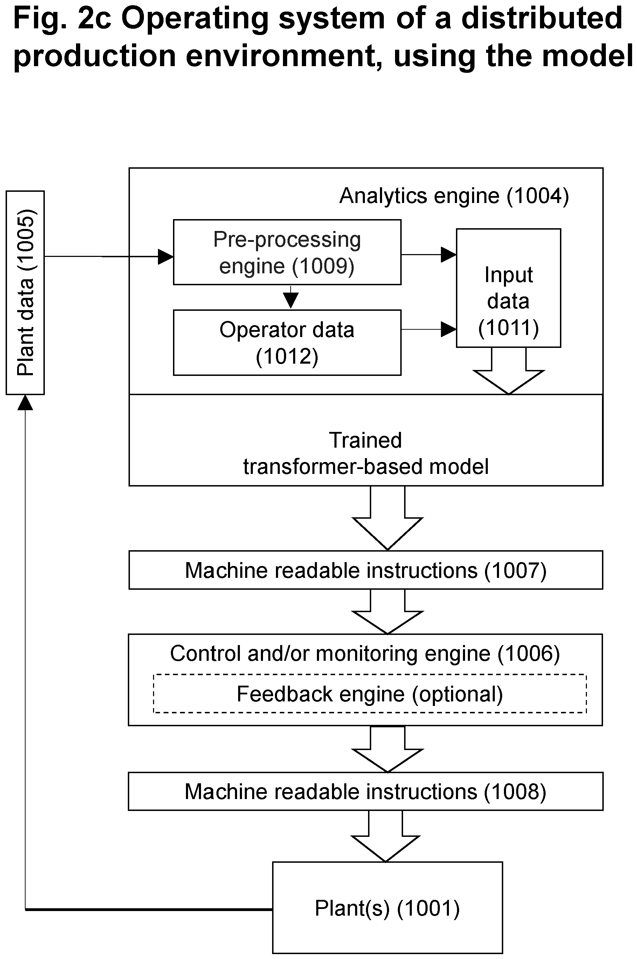

FIG. 2A illustrates an operating system of the distributed production environment of FIG. 1. The operating system comprises (re)training a pre-trained transformer-based model and using a trained transformer-based model for controlling and/or monitoring production such as chemical production. Training a pre-trained transformer-based model is further described in the context of FIG: 2B. Using the purpose trained transformer-based model is further described in the context of FIG. 2C.

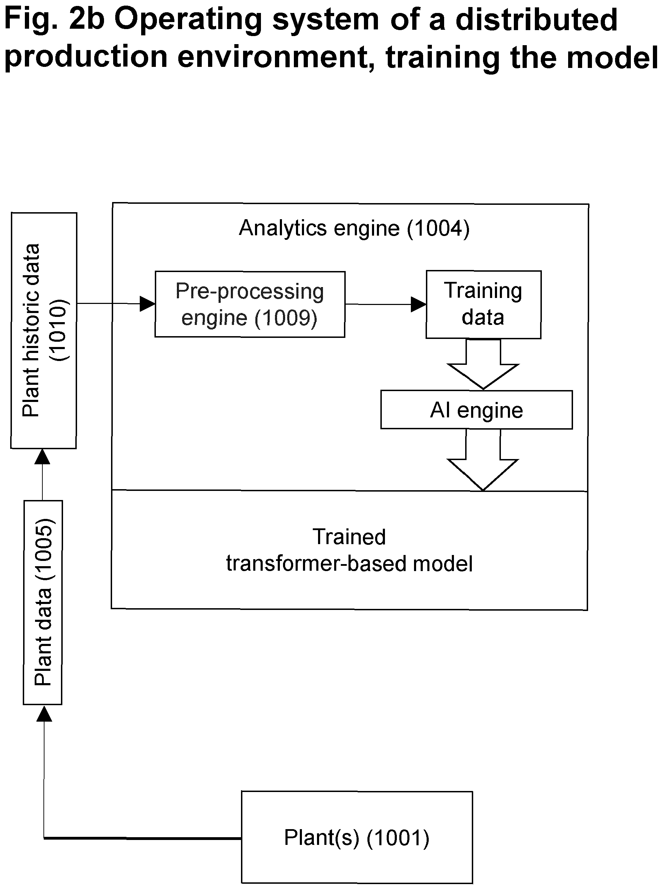

FIG. 2B illustrates training a pre trained transformer-based model on plant data generated by the production environment of FIG. 1.

Training (fine-tunning, re-training) of a pre-trained transformer-based model, such as described in the context of FIGs. 9-12, comprises accessing a pretrained transformer-based model via a computer interface (GUI, API, web-based interface) and receiving, via the interface, plant historic data 1010 from pre-processing engine 1009. An operator re-training the pre-trained transformer-based model may prompt the pre-trained transformer-based model to access the plant historic data via the computer interface, or alternatively, the operator may upload, via the computer interface, the historic plant-based data from a database to the AI engine that comprises at least one processor used for operating the pre-trained transformer-based model. The operator re-training the pre-trained model may be a human operator, an automated operating system comprising a computer processor, or a hybrid operating system comprising a human operator and a computer assisted operating system prompting the pre-trained model to train or re-train on plant-based data.

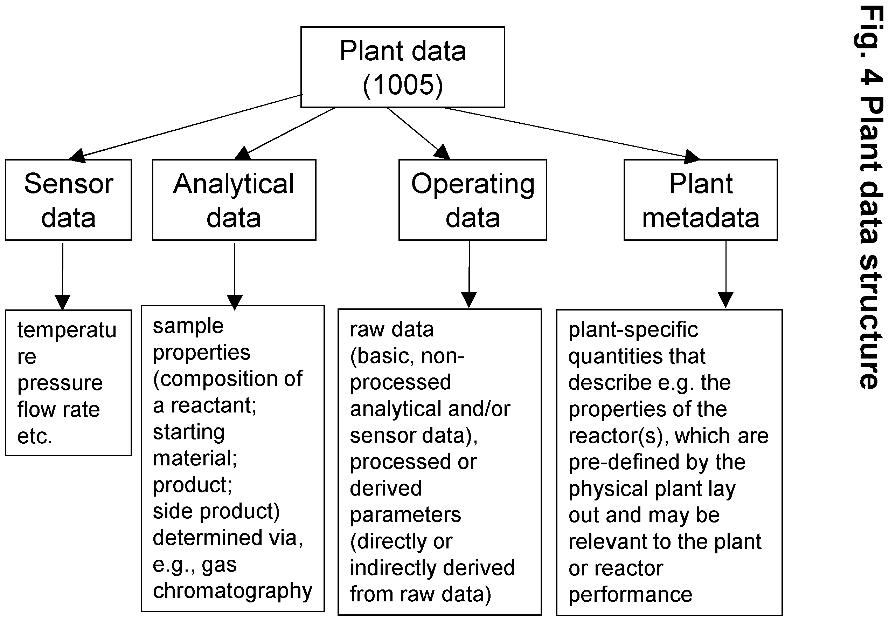

The plant historic data 1010 may be based on plant data 1005. Plant data 1005 and plant historic data may be stored in a database. Plant data 1005 may comprise a plurality of production data as described, for example, in the context of FIG. 4. During the training, the plant historic data may be embedded via an embedding layer as described within the context of FIG. 9. Embedding the plant data may result in embedded plant data.

The above examples of plant data are mere examples illustrating possible ways of implementing the claimed invention. Plant data should be construed broadly and should be understood as any kind of data associated with producing a product by a technical infrastructure. Any type or format of data associated with production may be pre-processed by the pre-processing engine into data suitable for training or using the transformer based model for production.

At the end of a training cycle, the analytics engine 1004 may output (release) a trained transformer-based model suitable for use in a distributed production environment such as chemical production. The released trained model may be stored in a database for, e.g., version control of released models. The released trained model may be a computer program product. An access to the released trained model may be provided to a user as a data service for assisting production.

Training plant-based data may be plant-based data in one or more languages. Training the pre-trained transformer-based models on training plant-based data in one or more languages allows for enlarging plant-based training dataset, and additionally, allows for providing operating instructions for production in one or more languages. Providing instructions in one or more languages may improve user interaction with the trained transformer-based model.

FIG. 2C illustrates an embodiment of using a trained transformer-based model for controlling the distributed production environment shown in FIG. 1.

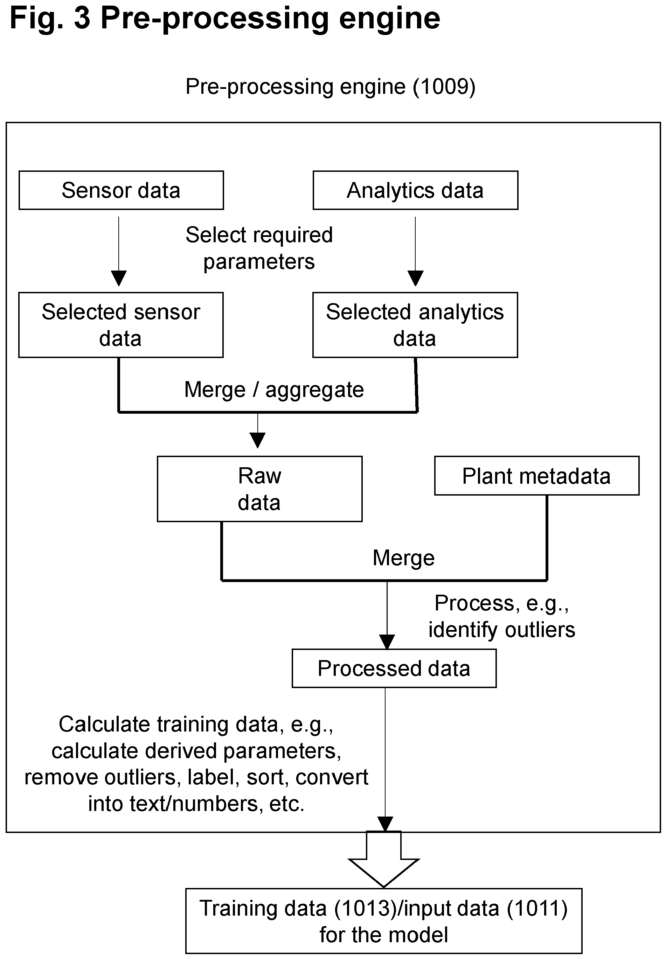

The plant data 1005 may be provided to the pre-processing engine 1004 for pre-processing. Pre-processing the data 1005 may comprise steps as, for example, described in the context of FIG. 3. Pre-processing may also involve other steps such as labeling data, removing noise, structuring unstructured data, converting data into different formats, and/or alike required to provide training/input data based on plant data suitable for training or using a transformer-based model for production.

The pre-processed data from the pre-processing engine 1004 may be used as plant-based input data for the trained transformer-based model for production.

The trained transformer-based model may receive the plant-based input data and may, for example, predict anomaly in the plant-based input data. Based on analyzing the plant-based input data, the trained transformer-based model may, for example, predict how to resolve errors in operation of a plant, how to improve efficiency of production, how to resolve user queries associated with controlling and/or monitoring of production and alike. Based on the perdition, the analytics engine 1004 may generate machine readable instructions 1007 for control and/or monitoring engine 1006.

The analytics engine 1004 operating the pre-trained transformer based model may have at least one computer interface (e.g., graphical user interface, GUI, a web based computer interface, and/or application programming interface, API) for operating the transformer based model (uploading data, providing prompts such as prompts comprising instructions for accessing plant based training data and/or input plant based data, providing prompts for re-training, providing prompts for generating machine readable instructions 1007, means for reviewing machine readable instructions 1007, means for receiving notifications when new machine readable instructions are generated, and alike). The model (untrained, pre-trained, trained) may be stored in a database or a cloud. The model may be operated by the AI engine via the at least one computer interface (e.g., graphical user interface, GUI, a web based computer interface, and/or application programming interface, API).

A transformer-based model (any one of pre-trained, trained and/or retrained transformer based models) may be provided to the AI engine via a computer interface. In other words, one or more transformer-based models may be accessible by the AI engine. For example, the AI engine (e.g., at least one computer processor) may access a transformer-based model via said computer interface (e.g., API, user interface, web interface). Alternatively, a transformer based model may be a part of the AI engine (e.g., stored in a computer memory of the AI engine) or the transformer based model may be integrated with the AI engine (e.g., stored in a database accessible by the AI engine).

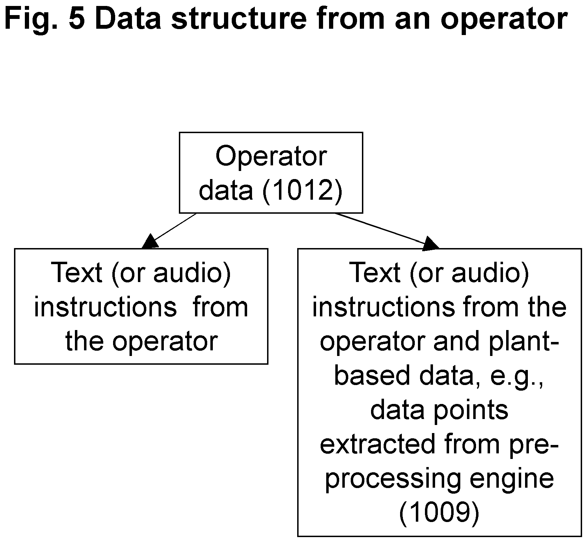

An operator of the trained transformer-based model may provide an input via a computer interface (e.g., a graphical user interface, application programming interface, a web-based interface) to the trained transformer-based model such as a text and/or audio query as, for example, described in the context of FIG. 5. The operator of the trained transformer-based model may additionally provide extracted data points, extracted, for example, from the data provided by the pre-processing engine. The extracted data points may, for example, relate to anomaly data points, typical or optimal operating parameters of the distributed production environment. The extracted data points together with the operator's query may form a part of the input data to the trained transformer-based model.

The trained transformer-based model may process the input data and provide a solution to the user query, for example, in the form of machine-readable instructions 1007.

The control and/or monitoring engine may review the machine-readable instructions 1007.

After the review, the control and/or monitoring engine 1006 may generate machine readable instructions 1008 that may be identical to machine readable instructions 1007, may be in part based on machine readable instructions 1007 or may be different from machine readable instructions 1007. An operator of the control and/or monitoring engine may use machine readable instructions 1007 merely for monitoring the production or may forward machine readable instructions 1007 as machine readable instructions 1008 for controlling the production. The operator may be a human operator and/or an operating system comprising a processor, and optionally, a human operator.

In case when machine readable instructions 1008 generated by the control and/or monitoring engine are different from machine-readable instructions 1007 generated by the trained transformer based model, the control and/or monitoring engine may trigger re-training of the trained transformer-based model. The re-training may be triggered automatically based on the feedback from the control and/or monitoring engine, the feedback may indicate that the machine-readable instructions 1007 and 1008 deviate. The feedback may comprise a feedback score indicating the degree of deviation.

Re-training may be triggered by an operator. Alternatively or additionally, re- training may be scheduled or continuous.

The trained transformer-based model may be trained on training plant-based data in one or more languages. The trained transformer-based model may provide operating instructions for production in one or more languages. Providing operating instructions in one or more languages may be advantageous, for example, in that training data may be more available in one language than in another language. The trained transformer-based model trained on plant based training data in one or more languages may be set to provide operating instructions in a language in which the most training data is available. Additionally, or alternatively, the trained transformer-based model may be set to provide operating instructions for production in a language of choice of a user making the operation of the model more user friendly. Additionally, or alternatively, the trained transformer-based model may be requested to provide operating instructions for production in more than one language for cross checking operating instructions and selecting the most suitable instructions for improved production.

FIG. 3 illustrates a pre-processing engine of the operating system as shown in FIG. 2.

Raw plant data 1005 as described in the context of FIG: 4 may be provided to pre-processing engine 1009 via a computer interface.

The pre-processing engine 1009 may pre-process raw plant-based data to provide plant-based training data and/or plant-based input data to the transformer-based model. The input data may be stored in a database. The input data may be provided to the transformer-based model via a computer interface (e.g., by prompting the model to access the data). Pre-processing steps may comprise selecting required parameters, merging / aggregating, calculating plant-based training data, e.g., calculating derived parameters, remove outliers and alike. Pre-processing may comprise filtering the data, removing noise, labeling of data, sorting data, converting data from formats that are not suitable for training/using the model into formats that are suitable for training/using the model and/or alike. The output data of the pre-processing engine may be stored in a database and used as plant-based training data for re-training a pre-trained a transformer-based model as described in the context of FIGs. 2a, 2c, 6 and 9 to 12. The output data of the pre-processing engine may also be used as input data for the trained transformer-based model as described in the context of FIGs. 1, 2a, 2c and 7.

FIG. 4 illustrates plant data structure from plant(s) as shown in FIG. 1.

Plant data may be received from the distributed production environment via a computer interface (e.g., a graphical user interface, an application programming interface, a web-based interface). The plant data may comprise different categories of plant data, e.g., sensor data, operating data, plant metadata, analytical data.

Sensor data may relate to measured quantities available in production plants by means of installed sensors, e.g. temperature sensors, pressure sensors, flow rate sensors, etc.

Analytical data may relate to quantities provided from analytics measurements of samples extracted at any point from a production plant such as a composition of a reactant, starting material, a product and/or a side product as determined e.g. via gas chromatography from samples extracted during production at different stages of the production process, e.g. before or after catalytical reactor(s).

Operating data may relate to raw data (basic, non-processed analytical and/or sensor data), or processed or derived parameters (directly or indirectly derived from raw data).

Plant metadata may indicate a physical plant layout and may include plant-specific quantities that describe, e.g., the properties of reactor(s), which are pre-defined by a physical plant layout and may be relevant to the plant or reactor performance.

The plant data 1005 may comprise text and/or numbers (structured data). Plant data may also be unstructured. The unstructured data (such as, for example, scans, datasheets comprising images, QR codes, and alike) may be pre-processed by the pre-processing engine and converted into text and/or numbers suitable for training of a pre-trained transformer-based model as described in the context of FIGS. 9 to 12.

FIG. 5 illustrates data structure from an operator.

A user (e.g., an operator of a production environment) may input a query to the analytics engine as, for example, text or audio query regarding monitoring and control of distributed production. The query may be, for example, request for providing operating instructions for production, e.g., operating instructions related to controlling and/or monitoring one or more production operations of the distributed production environment. For example, the operator may request the trained transformer-based model to provide operating instructions for resolving an anomaly in plant data, resolving an error in plant operation, resolving problems with equipment operation, providing steps for carrying out a task related to one or more operations of the distributed production environment. The analytics engine may predict a solution to the query based on the input from the operator and input plant-based data. The solution may comprise machine readable instructions 1007 (operating instructions), for example, for changing operating parameters of equipment 1002, replacing equipment 1002 and/or sensors 1003, carrying out maintenance, carrying out one or more steps related to one or more production operations and/or alike.

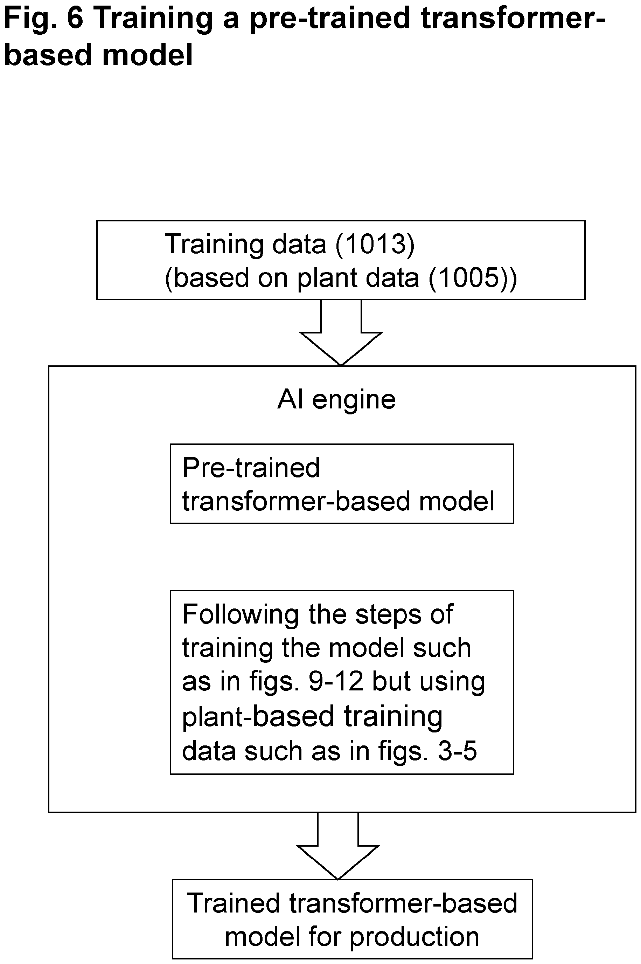

FIG. 6 illustrates further details of re-training a pre-trained transformer-based model for production in addition to embodiments in FIGs. 2a and 2b.

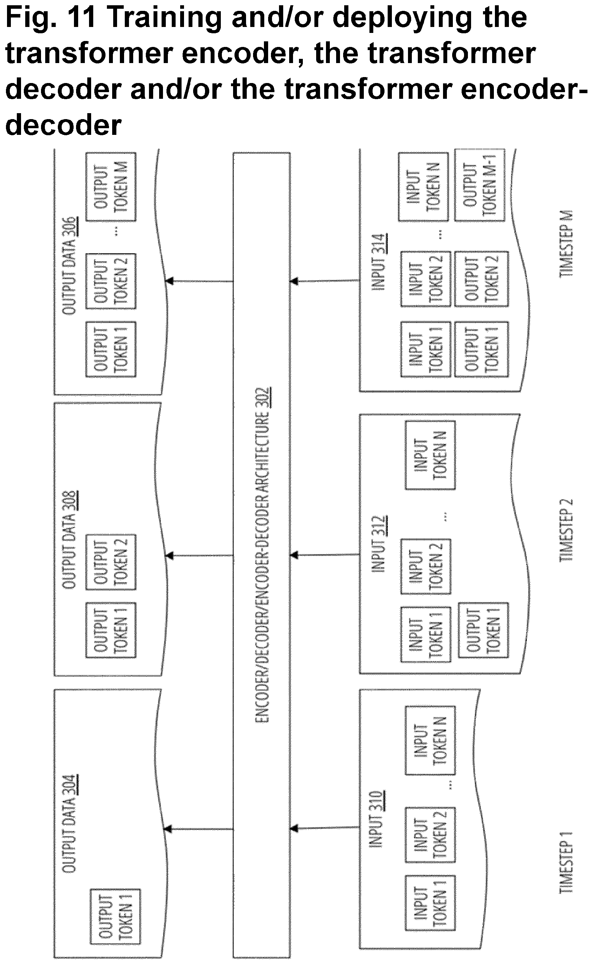

A pre-trained transformer-based model pre-trained on text and/or numbers (such as illustrated in FIGs. 9 to 12) may be trained for production based on plant historic data (plant-based training data). In particular, the transformer-based model may be trained and/or parametrized as described within the context of FIG. 2b and FIG. 11, training and/or deploying the transformer encoder, the transformer decoder and/or the transformer encoder-decoder. Training steps as described in context of FIGs. 9-12 may be followed for re-training the model for production using plant-based data instead of generic text/numbers as illustrated in FIGS 9 to 12. A trainer of a pre-trained transformer-based model may create a prompt to trigger re-training of the pre-trained transformer-based model and indicate or upload plant-based training data based on plant data 1005 for training, e.g., via a computer interface (e.g., web based interface, API, GUI). At the end of the training cycle, the trainer of the model may test the trained model, and based on the testing, the trainer may run additional training cycles or release the trained model for use in production as described in the context of FIGs. 2a and 2c.

The released trained transformer-based model may be stored in a database or a cloud. The released model may be operated by a computing unit/nod comprising a computer processor such as the analytics engine. A copy of the trained transformer-based model may be provided to a user for use and/or further training. Alternatively, only an access to operate the trained transformer-based model may be provided to a user.

Instead of the pre-trained transformer-based model as described in the context of FIGs. 9 to 12, another foundation model may be used by the analytics engine 1004, such as, for example, ChatGPT (GPT-2, GPT-3, GPT-3-5-turbo, GPT-4 or higher/similar), Davinci, BERT (Bidirectional Encoder Representations from Transformers), DistilBERT, Transformer-XL, XLNet (eXtreme Language understanding Network), T5 (Text-to-Text Transfer Transformer), RoBERTa (Robustly Optimized BERT approach), ELECTRA (Efficiently Learning an Encoder that Classifies Token Replacements Accurately), Reformer, Longformer, DeBERTa (Decoding-enhanced BERT with disentangled attention) and alike, or any other large language model pre-trained on big data such as generic text, image, video. Depending on availability of plant-based training data, availability of computing resources and required precision in analyzing data, a user may choose a foundation model with smaller or larger number of parameters. The transformer-based model shown in FIGs. 9 to 12 may be pre-trained to release a pre-trained model with the required number of parameters to suit the technical purpose of the user. The pre-trained model pre-trained in the context of FIGs. 2b, 9 to 12 may be further refined to release a model with even less parameters for improved computing speed and reduced computing resources.

FIG. 7 illustrates contextualization of prompts.

A user (an operator of a production environment) may prompt, via a computer interface (e.g., a graphical user interface, an application programming interface, a web-based interface), a trained transformer-based model as described in the context of FIGS. 2a, 2b and 6 to resolve a user query related to how to control/monitor production. The user may further provide a context of the query, for example, sensor data, operating data, plant metadata, analytical data. The user may select context via the computer interface or enter the context via text and/or audio channel in one or more languages. The user may provide a second a context. The second context may, for example, comprise one or more key words (e.g., anomaly, error associated with a piece of equipment X, error in software operating a piece of equipment X), one or more datapoints from plant data, e.g., one or more anomaly data points, one or more standard operating parameters and alike.

Based on one or more contexts, and optionally, input plant based data, the user may prompt the trained transformer based model to predict a solution to the user query. The predicted solution may comprise machine readable instructions 1007 sent to control and/or monitoring engine 1006 for operating the production environment 1001.

An operator may provide one or more contexts in one or more languages and prompt the trained transformer-based model to provide operating instructions for production in one or more languages.

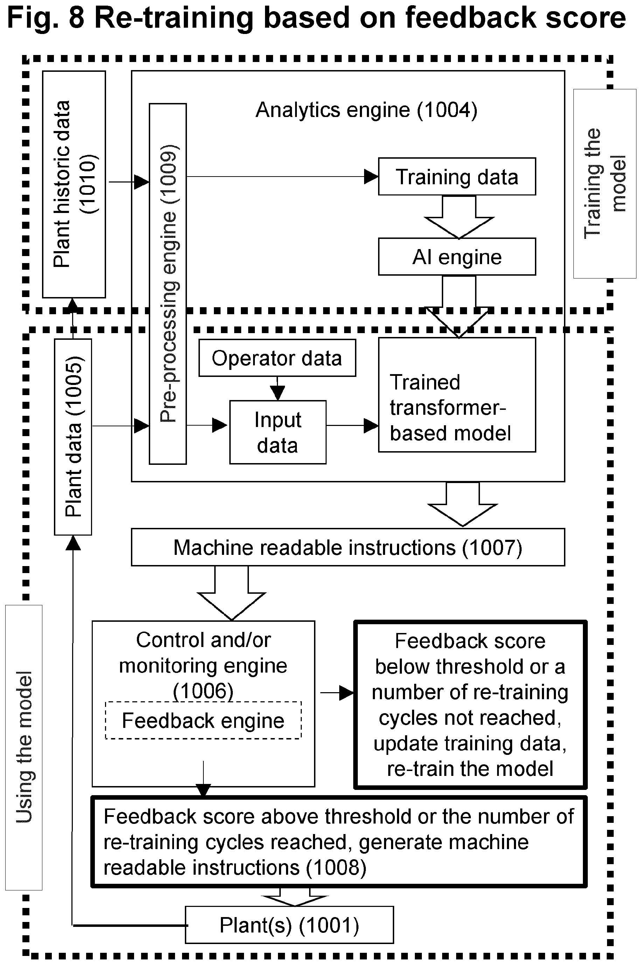

FIG. 8 illustrates trigger-based re-training of a trained transformer-based model when the model is in use for production.

Once trained as described in the context of FIG. 2b, 6 and FIG. 11, the trained transformer-based model may be further re-trained or fine-tuned based on a feedback related to the operating instructions provided by the trained transformer-based model. For example, an operator may monitor machine readable instructions 1007 provided by the trained transformer-based model to the control and/or monitoring engine 1006. The operator may further assign a feedback score and a threshold related to the operating instructions provided by the trained transformer-based model. In the event of the score falling below a threshold value, re-training may be triggered automatically by a computer processor (e.g., the control/monitoring engine or the analytics engine), or the training may be triggered by a human operator. For example, the score may be below the threshold value when the machine-readable instructions 1007 are not acceptable by the operator for controlling the equipment 1002 (e.g., in case the machine-readable instructions 1007 are contradictory to optimal operating conditions of said equipment 1002).

The re-training cycle may comprise steps as illustrated in the context of FIG. 2b, 6 and FIG. 9-11, wherein the training data is plant-based data. After a re-training cycle, the operator may provide a new feedback score for new machine-readable instructions 1007. The training may continue until the feedback score reaches the threshold or a maximum number of training cycles. At the end of re-training, the model may be stored and/or released for use in production.

Re-training may be carried on the background of ongoing production without the need to stop/interrupt the production.

FIG. 9 illustrates an embodiment of training an embedding layer. The embedding layer may be obtained by training for example a continuous bag of words model (CBOW) or a skip-gram model. The embedding layer may be suitable for generating embedded input data based on input data. Generating embedded input data may refer to embedding input data. Embedding input data may result in a representation associated with the input data. Thus, the embedded input 114 may be the representation associated with the input data. The input data may comprise a one or more elements. The one or more elements may be represented by the input vector 106. In particular, the embedded input 114 and/or the input vector 106 may be machine-readable and/or processable by a processor. For this purpose, the embedded embedded input 114 and/or the input vector 106 may be a tensor, in particular a first-rank tensor. Specifically, the input vector 106 may be a one hot vector or a summation of a plurality of one hot vectors. A one hot vector may be a vector with one entry unequal to zero. Examples for one hot vectors may be 108, 110 and 112. The entries unequal to zero in the one hot vector and/or in the input vector 106 may indicate the element. For example, a look up table may define the relation between the position of the entries unequal to zero and the element indicated by the one hot vector. The look up table may specify a plurality of different elements. The number of different elements may be equal to the number of entries in the one hot vector. The number of different elements may be referred to as vocabulary size. In an example, the elements may be represented by tokens and a sequence of elements may refer to at least a part of a sentence. The at least a part of the sentence may be represented by a plurality of tokens. A token may represent at least a part of the element and/or word. For example, where one element would be associated with only one word, words such as "embeddings", "embedding" or "embed" would constitute different elements. A first token may represent the stem "embed" and the endings, typically appearing in a plurality of word, may be represented by a second token, a third token and a fourth token. The second token, the third token and the fourth token may be used for representing other words such as "look", "looking" or the like, preferably together with a fifth token representing the stem "look". Ultimately, this tokenization of elements associated with a plurality of stems and a plurality of endings results in less tokens to be used for representing a plurality of elements and thus, uses less computational resources.

A look up table specifying a subset of the vocabulary size eg of the English language may comprise 10,000 words or more. The embedded input 114 may be a lower-dimensional representation than the input vector 106. For example, typical embedded inputs 114 may comprise some hundreds of different entries. Followingly, the embedded inputs 114 constitute a densified representation of one or more elements using less computational resources. More than that, the embedded input 114 may represent a relation between two or more elements. For example, the words "Italy" and "Germany" may be similar or may be more closely related since they both define european countries, whereas the the word "embodiment" may be very different from the two respective words. The smaller the dot product between two embedded inputs 114 may be the more similar the two elements associated with the embedded inputs 114 may be. Hence, the embedded inputs 114 may represent one or more elements accurately and lead to accurate results based on processing the embedded inputs 114.

For transforming the input vector 106 into the embedded input 114, the embedding layer may comprise a number of neurons equal to the number of entries in the embedded input 114. Based on the embedded inputs 114, the output layer may generate the output vector 116. The output vector may be a vector and/or may indicate one or more elements. The output vector 116 may indicate one or more elements different from the input vector 106 and/or the one hot vectors associated with the input vector 106. For this purpose, the output layer may comprise a number of neurons equal to the number of entries of the input vector 106 and/or the output vector 116. The output layer may apply a softmax function to the embedded inputs 114. By doing so, the output vector may comprise the probabilities associated with the elements associated with the entries of the output vector 116 unequal to zero. Hence, from the output vector 116 one or more elements may be obtained with a corresponding probability. Where the input vector 106 may specify one or more sequence(s) of elements, the output vector 116 may specify one or more elements corresponding to the sequence(s) of elements specified by the input vector 106. In the example of FIG. 9, the element associated with vector 118 may correspond to the input vector with a probability of 71 %. Additional or alternative elements may correspond to the input vector as indicated by the output vector with lower probability. By defining a threshold to which the probability may be compared, the selection of the corresponding elements may be tailored to the needs of the user. The elements generated by the model comprising the embedding layer 102 and the output layer 104 may refer to the most probable elements indicated by the output vector 116. Hence, the model depicted in FIG. 9 may generate the element associated with the vector 118 with a confidence score of 71 %.

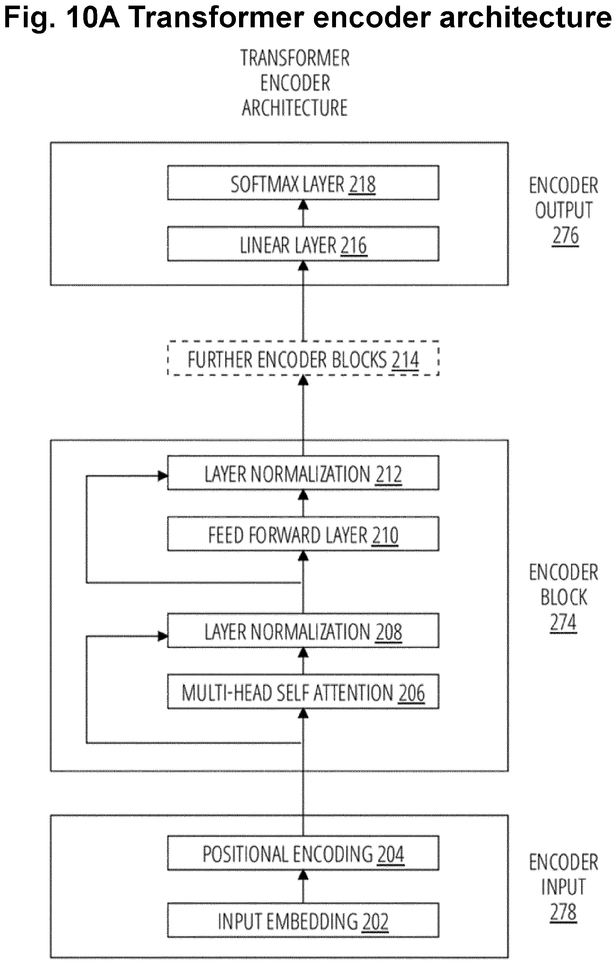

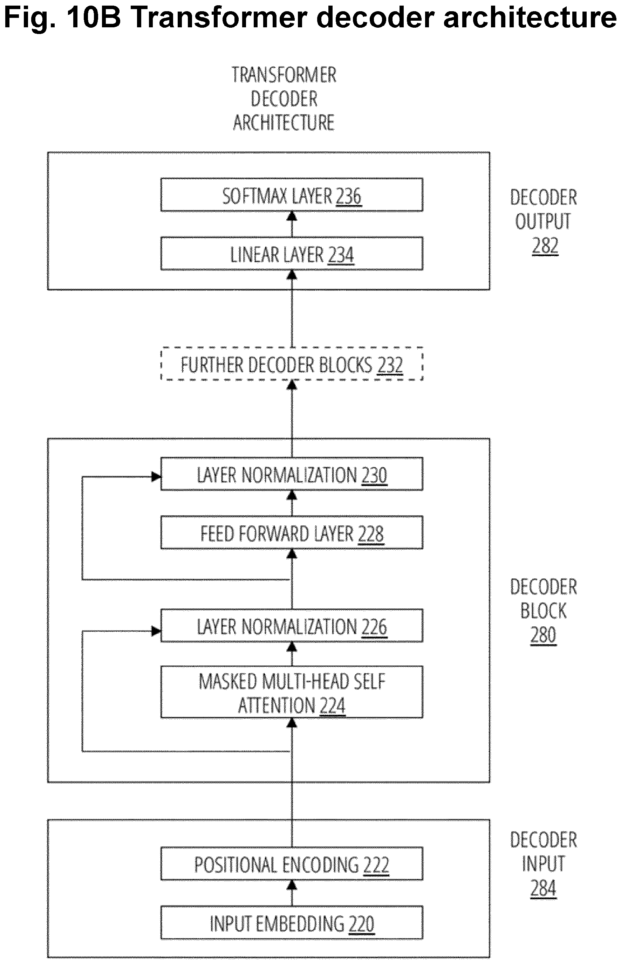

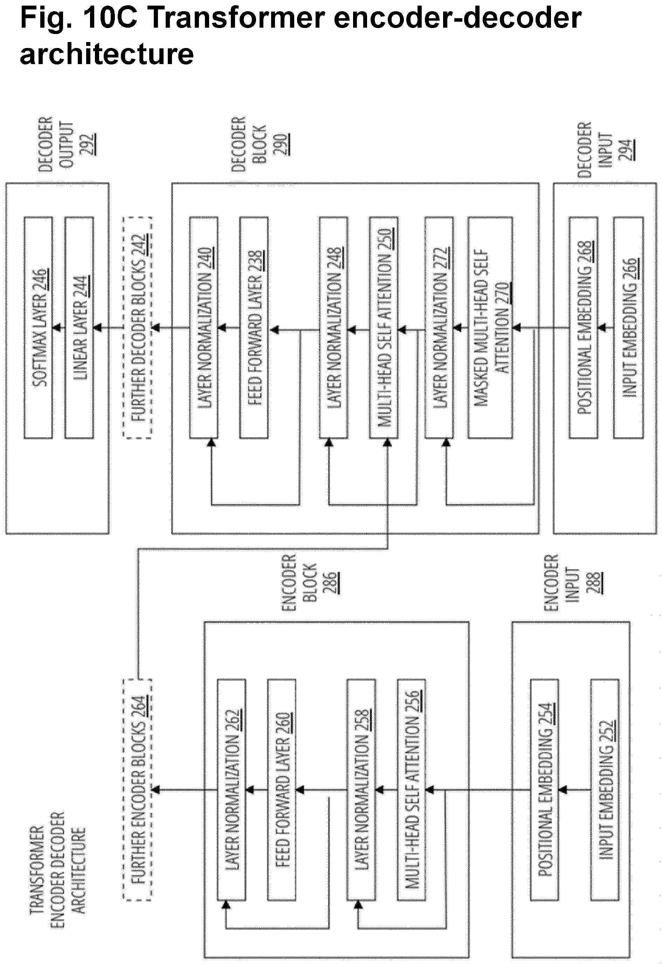

The model of FIG. 9 may be continuous bag of words (CBOW) model. The CBOW model may be trained based on a training data set comprising a plurality of input vectors and corresponding output vectors. As the training data set may not be labeled, the training of the CBOW model may be referred to as self-supervised. Before training of the CBOW model, the CBOW model may be initialized with random values assigned to the weights of the neurons. During the training of the CBOW model, the input vectors may be passed through the initialized embedding layer and the output layer and a loss may be determined by comparing the output vector obtained by passing the input vector 106 through the model to the output vector corresponding to the input vector 106 as specified by the training data set. Based on the determined loss, backpropagation may be applied to determine the gradients associated with the neurons of the embedding layer 102 and the output layer 104 to lower the loss. According to the determined gradients, the weights of the neurons may be updated by using a gradient descent algorithm. If a predetermined loss may be achieved by the CBOW model, the training may be terminated and a trained CBOW model may be obtained. From the trained CBOW model, the embedding layer 102 may be suitable for embedding input data comprising one or more elements. This embedding layer 102 may be used in other machine-learning architectures requiring an embedding layer 102 such as a transformer encoder, transformer decoder or transformer encoder decoder architecture as described within the context of FIG. 10A, FIG. 10B and FIG. 10C. For training these architectures, a trained embedding layer 102 may be required. Hence, a model such as a CBOW model may be trained prior to training the transformer encoder, transformer decoder or transformer encoder decoder architecture.

FIG. 10A illustrates an embodiment of a transformer encoder architecture. The transformer encoder comprises an encoder input 278, one or more encoder blocks 274, 214 and an encoder output. The transformer encoder architecture may be derived from the transformer encoder-decoder architecture as known in the art and shown in FIG. 10C. In particular, the transformer encoder may be referred to as X-former. The transformer encoder architecture may correspond to the encoder architecture associated with the transformer encoder-decoder architecture with an additional encoder output instead of connecting the encoder block directly to the decoder of the transformer encoder-decoder architecture. A plurality of transformer encoder architectures are available in the art such as the bi-directional encoder representations from transformers (BERT).

The input data may be received at the encoder input 278. The encoder input 278 may apply an input embedding 202. Applying the input embedding 202 may refer to passing the input data through an embedding layer eg as described within the context of FIG. 9. Further, the encoder input 278 may apply positional encoding 204. Applying positional encoding 204 may refer to adding a positional factor to the embedded input obtained via input embedding. Preferably, the input data may specify a sequence of elements. The positional factor $p_{pos}$ may be indicative of the position of the elements within the sequence. For example, the positional factor $p_{pos}$ may be obtained based on the following equation:

$$p_{pos}\left(2i\right) = \sin\left(\frac{pos}{10000^{\frac{2i}{d}}}\right)$$

$$p_{pos}\left(2i+1\right) = \cos\left(\frac{pos}{10000^{\frac{2i}{d}}}\right)$$

where pos may refer to the position of the element within the sequence, i may refer to the dimension associated with the input embedding and d may refer to the dimension of the model, eg transformer decoder, transformer encoder or transformer encoder-decoder. This may be referred to as absolute positional embeddings. Alternatively, the positional encoding may be based on rotary positional embeddings (RoPE). Positional encoding is beneficial since it enables the processing of sequential data without requiring further dimensions indicating the position of each element. Followingly, the positional encoding 204 reduces the computational resources needed for embedding the input data. By passing the input data through the encoder input, the input data may be transformed into a second-rank tensor representing the sequence of elements. This second-rank tensor may be referred to as embedded input data. The embedded input data may be processed by the encoder block. The embedded input data may be provided to the layer normalization 208 by a residual connection. Multi-head self attention 206 may be applied to the embedded input data. Multi-head self attention 206 may comprise the two components multi-head and self-attention. Self-attention may be understood as being a filter applied to the embedded input data. By applying the filter to the embedded input data, the elements associated with the embedded input data contributing to the to be generated output data may be identified for generating the output data. Hence, the filter may represent the degree of contributing to the to be generated output data by the elements associated with the embedded input data. Applying the filter may be referred to as weighting the elements associated with the embedded input data. This is advantageous specifically regarding long sequences of elements. The filter may be learned and improved during the training by learning to identify the contribution of elements associated with the embedded input data. For example, in the partial sentence "I went to the bakery to buy a" the last word may be generated by the data-driven model such as the transformer encoder. The self attention may focus the transformer encoder to attend to the word "bakery" and "buy" mostly to generate the word "bread". Self attention may refer to attention generated based on the input data. Hence, the filter may be determined based on the input data, preferably the embedded input data. The embedded input data may serve as query Q, key K and value V with respect to the self attention operation. The self attention may refer to attention based on the received input data. Hence, the filter may be calculated based on the following formula by inserting the respective tensors based on the embedded input data:

$$Attention\left(Q, K, V\right) = softmax\left(\frac{QK^T}{\sqrt{d_k}}\right)V$$

where $d_k$ corresponds to the dimension of the key.

For improving the efficiency of the transformer encoder further, the multiple heads are used to apply the filter resulting in the multi-head self attention 206. Multi-head self attention 206 may comprise applying the filter to two or more parts of the embedded input data. Hence, the tensor may be split into two or more parts and the filter may be applied to the two or more parts separately by two or more heads according to the following equation:

$$head\, i = Attention\left(QW_i^Q, KW_i^K, VW_i^V\right)$$

with parameter matrices $W_i^Q \in \mathbb{R}^{d \times d_Q}, W_i^K \in \mathbb{R}^{d \times d_k}, W_i^V \in \mathbb{R}^{d \times d_V}$ where i may refer to the number of heads, $d_V$, $d_K$ and $d_Q$ may refer to the dimensions of the value, key and query.

The result of the two or more head may be concatenated according to the following equation:

$$MultiHead\left(Q, K, V\right) = Concat\left(head\, 1, \ldots, head_h\right)W^0$$

where $W_0 \in \mathbb{R}^{hd_V \times d}$ and h may refer to the number of heads.

The embedded input data may be transformed via the multi-head self attention 206 into a context tensor. The context tensor may represent the sequence of elements and the relation between two or more elements of the input data. The context tensor may be a second rank tensor and/or may comprise one or more first rank tensor(s). After the multi-head self attention 206 layer normalization 208 may be applied based on the context tensor and/or the embedded input data from the residual connection. Applying layer normalization 208 may refer to normalizing the context tensor. Normalizing the context tensor may lower the values of the entries of the context tensor. This reduces the computational cost associated with processing the context tensor. Layer normalization 208 may be followed by passing the context tensor to a feed forward layer 210 again followed by layer normalization 212 based on the residual connection to the context tensor and/or the output of the feed forward layer 210. The feed forward layer 210 may be a feed-forward neural network. The feed-forward neural network may comprise of a plurality of fully connected neurons. Passing the context tensor through the feed-forward neural network may result in transforming the context tensor linearly. Additionally or alternatively, the neural network may comprise one or more activation functions such as a rectified linear unit (ReLU). Hence, the neural network may be configured for performing one or more non-linear operations to the context tensor and/or transforming the context tensor non-linearly. After the context tensor has been transformed and/or normalized by the feed forward layer 210 and the layer normalization 212, the context tensor may be provided to one or more further encoder blocks 214. Having passed the context tensor through the feed forward layer 210 may adapt the context tensor for the processing by a further attention layer of the one or more further encoder blocks 214 for applying a self attention filter, preferably multi-head self attention 206. The context vector after being transformed by the layer normalization 212 and the feed forward layer 210 may be referred to as hidden state.

The encoder output 276 comprises of a linear layer 216 and a softmax layer 218. The linear layer 216 may transform the context vector into a logits vector. The linear layer may be fully-connected. The logits vector obtained by passing the context tensor through the linear layer 216 may be passed through the softmax layer 218. Passing the logits vector through the softmax layer 218 may refer to applying the softmax function to the logits vector. Applying the softmax function to the logits vector may result in a probability distribution of one or more elements corresponding to the sequence of elements in the input data. From the probability distribution based on predefined selection criteria, one or more elements may be chosen. The one or more chosen elements may be referred to as the one or more elements generated by the transformer encoder. The one or more generated elements may be provided to the encoder input for generating further one or more elements corresponding to the sequence of the input data and the one or more elements generated by the transformer encoder as described within the context of FIG. 11.

FIG. 10B illustrates an embodiment of a transformer decoder architecture.

The transformer decoder comprises a decoder input 284, one or more decoder blocks 280, 232 and a decoder output 292. The transformer decoder architecture may be derived from the transformer encoder-decoder architecture as known in the art and shown in FIG. 10C. The transformer decoder may be referred to as X-former. The transformer decoder architecture may correspond to the decoder architecture associated with the transformer encoder-decoder architecture independent of receiving one or more hidden states from the encoder of the transformer encoder-decoder. A plurality of transformer decoder architectures are available in the art such as the generalized pretrained transformers (GPT).

The decoder input 284 may apply input embedding 220 and positional encoding 222 analogous to analogous to the input embedding 202 and the positional encoding 204 as described within the context of FIG. 10A.

The decoder block 280 may comprise the layer normalizations 226, the masked multi-head self attention 224, the feed forward layers 228 and/or the layer normalization 230. The embedded input data resulting from passing the input data through the decoder input 284 may be provided to the layer normalization 226 via a residual connection. Further, masked multi-head self attention 224 may be applied to the embedded input data. Masked multi-head self attention 224 corresponds to the multi-head self attention 206 as described within the context of FIG. 10A with additionally masking a part of the embedded input data associated with elements later in the sequence than the element to be generated. Additionally or alternatively, the part of the input data associated with elements later in the sequence than the element to be generated may not be received and/or transformed into the embedded input data. Thus, the transformer decoder may be suitable for generating a subsequent element to a sequence, whereas the transformer encoder may be suitable for generating a missing element in within one sequence and/or between two or more sequences. Therefore, the transformer encoder may be configured for classification tasks. The transformer decoder may be configured for text generation.

Similar to the transformer encoder as described within the context of FIG. 10A, a context tensor may be generated by applying the masked multi-head self attention 224 and the layer normalization 226. The context tensor may be provided to the layer normalization 230 via a residual connection. Further, the feed forward layer 228 and the layer normalization 230 may be analogous to the feed forward layer 210 and the layer normalization 212 as described within the context of FIG. 10A. The context tensor may be provided to one or more further decoder blocks 232.

The decoder output 292 may comprise of a linear layer 234 and a softmax layer 236. The linear layer 234 and the softmax layer 236 may be analogous to the linear layer 216 and the softmax layer 218 as described within the context of FIG. 10A.

FIG. 10C illustrates an embodiment of a transformer encoder-decoder architecture. The transformer encoder-decoder may comprise the encoder input 288, the one or more encoder blocks 286, 264, the decoder input 294, the decoder block 290 and the decoder output 292. The encoder input 288 may correspond to the encoder input 278 of FIG. 10A. The one or more encoder block 286, 264 may correspond to the one or more encoder blocks 274, 214 of FIG. 10A. The decoder input 294 may correspond to the decoder input 284 of FIG. 10B.

The decoder block 290 may comprise a masked multi-head self attention 270, a layer normalization 272, a feed forward layer 238 and a layer normalization 240 analogous to the masked multi-head self attention 224, the layer normalization 226, the feed forward layer 228 and the layer normalization 230 as described within the context of FIG. 2B. The decoder block 290 may further comprise a multi-head self attention 250 and a layer normalization 248. Analogous to the description of FIG. 10B, the context tensor may be obtained from the masked multi-head self attention 270 and the layer normalization 272. Multi-head self attention 250 analogous to the multi-head self attention 206 of FIG. 10A may be applied to the context vector obtained from the layer normalization 272 and the hidden states of the one or more encoder blocks 286, 264. Layer normalization 248 may be applied to the context vector obtained from the multi-head self attention 250 and the context vector obtained from the layer normalization 272 provided via a residual connection. The context vector resulting from the layer normalization 248 may be processed via the feed forward layer 238 and the layer normalization 240 analogous to the description of FIG. 10B. The context vector resulting from the layer normalization 240 may be provided to further decoder blocks 242 analogous to the decoder block 290. The context vector obtained from the one or more decoder blocks 290, 242 may be provided to the decoder output 292. The decoder output 292 may correspond to the decoder output 282 of FIG. 10B.

With the above-described architecture, the transformer encoder-decoder may receive and process input data at the encoder input 288 and the one or more encoder blocks 286, 264 and the decoder block 290 and the decoder output 292. Based on the input data, the transformer encoder-decoder may generate output data part by part or sequentially. The sequentially generated output data may be provided to and/or may be processed by the decoder input 294, the one or more decoder blocks 290, 242 and the decoder output 292. Preferably, a sequence may be provided to the encoder input 288 and after having generated at least a part of the output data, the decoder input 294 may be provided with at least the part of the elements of the output data already generated. By doing so, the next elements of the output data may be generated with a higher accuracy by taking the input data and the generated output data into account since more data is received by the transformer encoder-decoder may be received over time.

Because of the transformer encoder-decoder architecture, the transformer encoder-decoder may be configured for transforming a sequence into another representation of the sequence. An example for transforming one sequence into another representation may be translation of one sentence into another language. A plurality of transformer encoder-decoders are available in the art such as BART, T5 or the like.

In an embodiment, the layer normalization 208, 212 may be applied prior to the masked multi-head self attention 224, multi-head self attention 206 and/or the feed forward layer 210 in the transformer decoder, the transformer encoder and/or the transformer encoder-decoder. By doing so, the computational resources for applying the multi-head self attention 206 and/or the feed forward layer 210 to the embedded input data and/or the context tensor may be decreased as the entries of the respective tensors may be lower after normalization.

In an embodiment, the decoder output 292 may comprise of a classification neural network, further feedforward layers, convolutional layers, fully connected layers or the like. For example, the transformer encoder-decoder may be configured for choosing between a plurality of options. For this purpose, the transformer encoder-decoder may be provided with three different input data sets and may classify the context vectors obtained from the one or more decoder blocks 290 via one or more linear layers. Followingly, the architecture may be extended depending on the use case to be solved.[1]

FIG. 11 illustrates an embodiment of training and/or deploying the transformer encoder, the transformer decoder and/or the transformer encoder-decoder.

The encoder/decoder/encoder-decoder architecture 302 may correspond to the transformer decoder, the transformer encoder and/or the transformer encoder-decoder as describe within the context of FIG. 10A- FIG. 10C.

The output data generated by the encoder/decoder/encoder-decoder architecture 302 may comprise of one or more elements, in particular a sequence of elements. The previously generated elements of the output data may be provided as input for generating the next element in the sequence of the output data.

In the example of FIG. 11, the input data may comprise of N elements, in particular input tokens. An input token may be a token dedicated to be inputted into a data-driven model such as the transformer decoder, the transformer encoder or the transformer encoder-decoder. The output data to be generated may comprise of M elements. The encoder/decoder/encoder-decoder architecture 302 may generate one element of the output data based on receiving the input data and optionally previously generated elements of the output data at a timestep. Hence, for generating M elements M time steps are required. A time step comprises of providing input 310, 312, 314 to the encoder/decoder/encoder-decoder architecture 302 and receiving output data 304, 308, 306 from the encoder/decoder/encoder-decoder architecture 302. In a first timestep, the input 310 may comprise of N input tokens. The N input tokens may be associated eg with N words, stems or endings. Preferably, the N input tokens may specify a question. One or more input tokens may specify the beginning of the sequence of tokens and/or the end of the sequence of tokens. The input 310 may be processed by the encoder/decoder/encoder-decoder architecture 302. Based on the input 310 at least a part of the output data 304 may be generated. The at least a part of the output data may comprise a first output token. In the next timestep, the generated first output token may be provided together with the input 312. Specifically, where the input 312 may be received by a transformer encoder-decoder the input tokens may be received at the encoder input 288 and the first output token may be received at the decoder input 294. Where the input 312 may be received by the transformer encoder, the input 312 may be received by the encoder input 278 and analogously regarding the transformer decoder and the decoder input 284. Based on the input 312, the output data 308 comprising the first output token and a second output token may be generated. Generating the output data 308 based on the input 312 may refer to generating the second token based on the first token and the N input tokens, wherein the first token may have been generated based on the N input tokens. This process may be repeated until the last token in the sequence of the output data 306 may be generated. Preferably, the last token may be an end token. The end token may terminate the generation of a further output token.

Similarly, to the data processing during deployment of the encoder/decoder/encoder-decoder architecture 302, the encoder/decoder/encoder-decoder architecture 302 may be trained. The training data set may comprise a plurality of sequences comprising a plurality of elements. The sequences may be associated with the input data and/or the output data. Additionally or alternatively, the sequences may be independent of the input data and/or the output data. For example, where the input data and the output data may refer to chemical compositions represented via text, the training data set may comprise sequential text data independent of chemical compositions. In this example, the training data set may comprise sequences of words originating from a conversation. In an embodiment, the training data set may comprise at least partially input data sets and/or output data sets.

The training may be initialized by initializing the encoder/decoder/encoder-decoder architecture 302. In an embodiment, the parameters associated with the encoder/decoder/encoder-decoder architecture 302 may be initialized randomly. Additionally or alternatively, the input embedding of the encoder/decoder/encoder-decoder architecture 302 may be obtained by training a CBOW model or a skip gram model as described within the context of FIG. 9. The trained embedding layer may be used during training. The parameters associated with the embedding layer may be kept constant and/or may be updated after a predefined number of training epochs. By doing so, the number of parameters to be updated is lower enabling a faster and less computational resources-consuming training. Further, the accuracy associated with the embedding layer may be constant and/or may be increased by avoiding error compensation in relation to the just initialized encoder/decoder/encoder-decoder architecture 302.

During the training of the encoder/decoder/encoder-decoder architecture 302, at least a part of the sequences of the training data set may be provided to the encoder/decoder/encoder-decoder architecture 302 one by another and one or more elements may be generated based on the sequences of the training data set one by another. The elements generated based on the sequences may follow the elements of the parts of sequences the encoder/decoder/encoder-decoder architecture 302 may have been provided with. The generated one or more elements may be compared to the one or more elements following the at least a part of the sequences provided to the encoder/decoder/encoder-decoder architecture 302 as specified by the training data set. Hence, during the training the encoder/decoder/encoder-decoder architecture 302 may generate a guess on the next element and the guess on the next element in a sequence may be compared to the ground truth specifying the actual next element according to the training data set. Based on the guess on the next element and the ground truth a loss may be determined. The loss may define the similarity between the guess on the next element and the ground truth. The loss may be determined by forming a vector dot product between the token associated with the one or more elements and the token associated with the ground truth. A loss unequal to zero may result in updating the parameters associated with encoder/decoder/encoder-decoder architecture 302. Preferably the parameters associated with the encoder/decoder/encoder-decoder architecture 302 may be independent of the embedding layer. For example, the parameters associated with the encoder/decoder/encoder-decoder architecture 302 may be weights of the neurons of the encoder/decoder/encoder-decoder architecture 302.

Based on the determined loss, backpropagation may be applied to determine the gradients associated with the parameters of the parameters associated with encoder/decoder/encoder-decoder architecture 302 to lower the loss. According to the determined gradients, the parameters associated with the encoder/decoder/encoder-decoder architecture 302, preferably the weights of the neurons associated with the encoder/decoder/encoder-decoder architecture 302, may be updated by using a gradient descent algorithm.

The training data set may be unlabeled. The sequences of elements within the training data set may inherently comprise the ground truth for determining the loss with respect to the one or more elements generated during the training of the encoder/decoder/encoder-decoder architecture 302. Hence, the encoder/decoder/encoder-decoder architecture 302 may be trained self-supervised. This is advantageous since time and resources for creating a labeled training data set may be saved. Furthermore, this enables the usage of large training data sets associated with a size of several tera bytes. Consequently, the data-driven model may be accurate in generating elements of a sequence. In addition, the large training data set enables few shot predictions or even zero shot predictions. Hence, the data-driven models trained as described above are versatile contributing to saving resources needed for training and/or hosting a plurality of purpose-driven models such as CNNs. The training described above may be referred to as pretraining. The data-driven model may be configured for performing few shot or even zero shot predictions with respect to a plurality of use cases after pretraining. The performance of the data-driven model may be increased further by additional training referred to as finetuning.

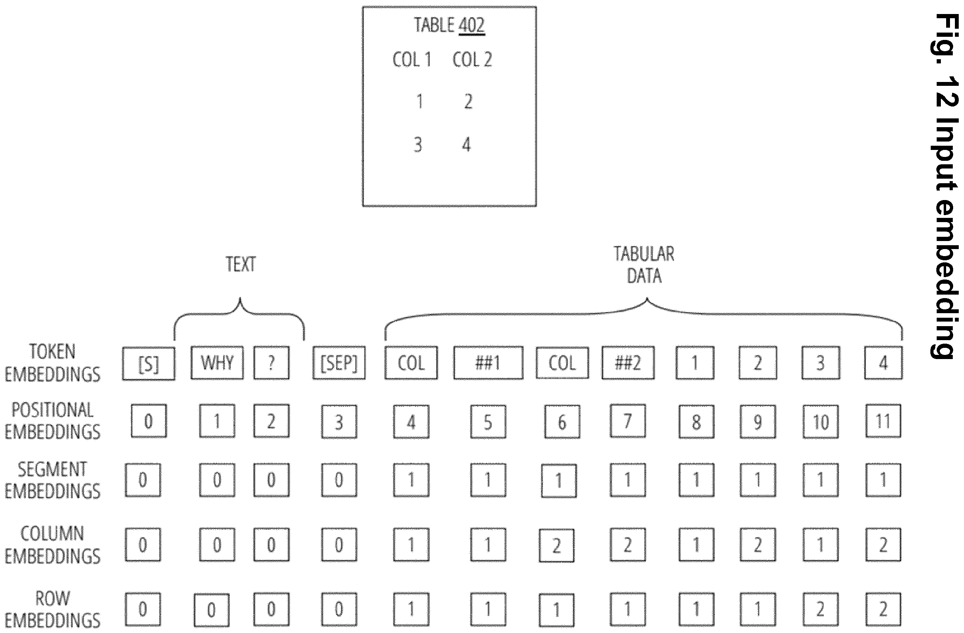

FIG. 12 illustrates an embodiment of input embedding. Where the sequence of elements associated with the input data, preferably comprised in the input data, may be of one type, the input embedding 202, 220, 252, 266 as described within the context of FIG. 10A - FIG. 10C may be used. For example, a type of input data may be text where the elements may be associated with at least a part of a word, a punctuation character, a start token specifying the beginning of one or more sequences associated with the input data and/or the end token. In another example, the input data may be at least partially numerical. Hence, the input data may comprise a plurality of numbers. Numerical input data may be for example tabular data. Tabular data may specify one or more rows and/or one or more columns. Hence, the tabular data may comprise one or more cells, wherein the cells may be associated with one or more numerical values.

Numerical input data may require a different embedding than text input data. Input embeddings for numerical input data may comprise a token embedding, a positional embedding, a column embedding, a row embedding or a combination thereof.

Applying a token embedding to one or more elements, in particular tokens associated with the input data may result in a machine-processable representation associated with the one or more elements, in particular tokens. Applying the token embedding to one or more elements may refer to passing the one or more elements through the embedding layer, eg as described within the context of FIG. 9. Hence, token embeddings may specify the one or more elements, in particular tokens in a machine-processable representation. For example, the token embedding may transform a numerical value into a vector. This is advantageous since this representation can be enriched by further information such as the position of the token within the sequence and/or within a table associated with the sequence of tokens. The positional embedding may be analogous to the positional embedding as described within the context of FIG. 9, FIG. 10A-FIG. 10C. Where the input data may be tabular data, column embedding may be applied. Applying a column embedding to one or more elements, in particular tokens associated with the input data may result in a machine-processable representation specifying the location of the one or more elements within a table 402, preferably within the columns of the table 402. Applying the column embedding may refer to adding a column factor to the input data embedded via token embeddings, in particular the embedded input data. The column factor may be the same for elements associated with the same column and/or may differ between two or more elements associated with different columns. Analogous, row embeddings may be applied where the input data may be tabular data. Applying a row embedding to one or more elements, in particular tokens associated with the input data may result in a machine-processable representation specifying the location of the one or more elements within a table 402, preferably within the rows of the table 402. Applying the row embedding may refer to adding a column factor to the input data embedded via token embeddings, in particular the embedded input data. The row factor may be the same for elements associated with the same row and/or may differ between two or more elements associated with different rows.

In an embodiment, input data may be at least partially numerical and at least partially text. Hence, the input data may comprise two or more types of data. A type of data may refer to a modality. Followingly, different embeddings may be applied to the input data. To parts of the input data comprising text the input embedding referred to in FIG. 9, FIG. 10A- FIG. 10C may be applied. To parts of the input data being numerical token embeddings, positional embeddings, column embeddings and row embeddings may be applied. Further, segment embeddings may be applied to the input data independent of the type of input data. The segment embedding may specify the type of input data one or more elements may be associated to. For example, if the input data comprises of text and numbers, the input data may comprise of two types of input data. Applying the segment embedding to the input data may refer to adding a segment factor to the input data, preferably the embedded input data and/or the input data after having applied the token embedding. The segment factor may specify the type of data associated with the one or more elements. The segment factor may be the same for one or more elements associated with the same type of input data and/or may differ between two or more elements associated with different types of input data.

Applying the token embedding, the positional embedding, the segment embedding, the column embedding, the row embedding or a combination thereof may result in embedded input data and/or may be the output of any one of the encoder input 278, 284, 288 or decoder input 284, 294. The data obtained by applying the token embedding, the positional embedding, the segment embedding, the column embedding, the row embedding or a combination thereof may be processed by the encoder block 274, 286, decoder block 280, 290, encoder output 276, decoder output 292, 282.

The training plant-based data 1013, untrained/pre-trained transformer-based model as described in the context of FIGs. 9-12 and/or the trained transformer-based model as described in the context of FIGs. 2a, 2c, 6 and 8, may be stored in a database, on an electronic data carrier or in a cloud. An access to the training plant-based data 1013 suitable for training a pre-trained transformer-based model, an untrained/pre-trained transformer-based model as described in the context of FIGs. 9-12 and/or the trained transformer-based model as described in the context of FIGs. 2a, 2c, 6 and 8, may be granted to a user as a computer readable token. The computer readable token may be an authorization key generated by a computer processor upon a request of a requesting computing node associated with a user. The request may be sent to an authorization engine comprising at least one computer processor having rights to grant one or more authorization keys to access the training plant-based data and/or one or more of the untrained, the pre-trained, the trained, the re-trained transformer based models as described withing the context of FIGs. 2a, 2c, 6, 8 and 9-12.

A user may access the training data via the token for processing the data and receiving the processed result without receiving the actual training data. The user may also receive the actual training plant-based data or a part of the training plant-based data. Depending on the access rights, a user may use (upon receiving the token) one or more of the untrained, pre-trained and/or trained transformer-based models for user's technical purpose. The user may train/re-train one or more models that the user is granted a permission using the training plant-based data as claimed or using their own training data. An access token for using training plant-based data as claimed may be the same or different as to an access token for using one or more models as described withing the context of FIGs. 2a, 2c, 6, 8 and 9-12. Having a separate access token for each of the data products (i.e., training plant-based data) or data services (i.e., using one or more models as described withing the context of FIGs. 2a, 2c, 6, 8 and 9-12) may increase security aspects of using data products and/or data services. An access token may comprise user credentials, one or more generation algorithms, user authentication, two-factor authentication and/or alike.

One possible way of implementing the invention of the current application is described in the itemized list below.

Items:

Item 1.   A computer implemented method for releasing a trained transformer-based model for controlling and/or monitoring a distributed production environment, the distributed production environment comprising one or more pieces of equipment producing a product, the method comprising: providing, via a computer interface, training plant-based data associated with one or more production operations; providing, via the computer interface, a pre-trained transformer-based model comprising at least a transformer component; prompting the pre-trained transformer-based model to re-train using the training plant based data; releasing the trained transformer-based model for one or more production operations of the distributed production environment.

Item 2.   A computer implemented method for using the trained transformer-based model of item 1 for controlling and/or monitoring a distributed production environment, the distributed production environment comprising one or more pieces of equipment producing a product, the method comprising: receiving, by a computer processor, access to a trained transformer based model; receiving, via a computer interface, input plant-based data associated with one or more production operations; prompting the trained transformer-based model to analyze the input plant-based data and provide operating instructions for production.

Item 3.   The computer implemented method of item 1, wherein raw plant based data is pre-processed by a pre-processing engine for providing the training plant based data.

Item 4.   The computer implemented method of item 2, wherein the raw plant based data is pre-processed by a pre-processing engine for providing the input plant based data.

Item 5.   The computer implemented method of item 2 or 4, wherein the input plant-based data comprises data from an operator provided via a computer interface to the operator.

Item 6.   The computer implemented method of any one of items 2, 4 or 5, further comprising a prompt from an operator prompting the trained transformer-based model to provide machine readable instructions based on a query provided to the model by the operator via a computer interface.

Item 7.   The computer implemented method of any one of items 2, and 4-6, wherein the prompt comprises one or more contexts related to one or more production operations at the distributed production environment.

Item 8.   The computer implemented method of any one of items 1-7, wherein the training plant-based data are plant-based data in one or more languages and/or the operating instructions for production are in one or more languages.

Item 9.   The computer implemented method of any one of items 1-8, wherein the method further comprises updating the training plant-based data and prompting the trained transformer-based model to re-train based on the updated training plant-based data.

Item 10.  The computer implemented method of items 9, wherein re-training of the trained transformer-based model is any one of a scheduled re-training, continuous re-training or trigger based-retraining.

Item 11.  The computer implemented method of items 10, wherein the trigger is based on a threshold and a score related to the operating instructions provided by the trained transformer-based model, and/or optionally, a number of re-training cycles.

Item 12.  A computer implemented method of any one of items 2-11, wherein the operating instructions comprise machine readable instructions for controlling and/or monitoring production.

Item 13.  A computer program product comprising computer readable instructions that when executed on a computer cause the computer to execute the steps of any one of items 1-12.

Item 14.  A computer-readable storage medium storing computer-readable instructions that when executed on a computer cause the computer to execute the steps of any one of items 1-12.

Item 15.  A computer product comprising a computer readable token for accessing training plant based data and/or the trained or the pre-trained model of any one of items 1-12.

It may be understood that the features of the above embodiments are combinable unless otherwise disclosed in the current application.

**REFERENCE LIST**

1001        Plant(s);
1002        Equipment;

EP 4 498 183 A1

| 1003 | Sensors; |
|---|---|
| 1004 | Analytics engine; |
| 1005 | Plant data, e.g., sensors data, analytics data; |
| 1006 | Control and/or monitoring engine; |
| 1007, 1008 | Machine readable instructions; |
| 1010 | Plant historic data; |
| 1011 | Input data; |
| 1012 | Operator data; |
| 1013 | Training data; |
| 7001 | Prompting AI engine by providing a prompt such as a text prompt (e.g., solve an anomaly in plant operation); |
| 7002 | Adding a context to the prompt (e.g., anomaly in temperature); |
| 7003 Optional: | adding another context (e.g., a data point from pre-processing engine such as an identification of a plant in metadata, typical operating temperature of the plant, and/or alike); |
| 7004 | Generating by AI instructions for monitoring and/or controlling the production based on the prompt (e.g., instructions for how to solve the anomaly in temperature). |

**Claims**

1. A computer implemented method for using a trained transformer-based model for controlling and/or monitoring a distributed production environment, the distributed production environment comprising one or more pieces of equipment producing a product, the method comprising:

   - receiving, by a computer processor, access to the trained transformer based model;
   - receiving, via a computer interface, input plant-based data associated with one or more production operations;
   - prompting the trained transformer-based model to analyze the input plant-based data and provide operating instructions for the one or more production operations of the distributed production environment.

2. A computer implemented method for generating the trained transformer-based model for use according to claim 1, the method comprising:

   - providing, via a computer interface, training plant-based data associated with one or more production operations;
   - providing, via the computer interface, a pre-trained transformer-based model comprising at least a transformer component;
   - prompting the pre-trained transformer-based model to re-train using the training plant based data;
   - releasing the trained transformer-based model for the one or more production operations of the distributed production environment according to claim 1.

3. The computer implemented method of claim 2, wherein raw plant based data is pre-processed by a pre-processing engine for providing the training plant based data.

4. The computer implemented method of claim 1, wherein raw plant based data is pre-processed by a pre-processing engine for providing the input plant based data.

5. The computer implemented method of claim 1 or 4, wherein the input plant-based data comprises data from an operator provided via a computer interface to the operator.

6. The computer implemented method of any one of claims 1, 4 or 5, further comprising a prompt from an operator prompting the trained transformer-based model to provide machine readable instructions based on a query provided to the model by the operator via a computer interface.

7. The computer implemented method of any one of claims 1, and 4-6, wherein the prompt comprises one or more contexts related to one or more production operations at the distributed production environment.

8. The computer implemented method of any one of claims 2-7, wherein the training plant-based data are plant-based data in one or more languages and/or the operating instructions for production are in one or more languages.

9. The computer implemented method of any one of claims 2-8, wherein the method further comprises updating the training plant-based data and prompting the trained transformer-based model to re-train based on the updated training plant-based data.

10. The computer implemented method of claims 9, wherein re-training of the trained transformer-based model is any one of a scheduled re-training, continuous re-training or trigger based-retraining.

11. The computer implemented method of claims 10, wherein the trigger is based on a threshold and a score related to the operating instructions provided by the trained transformer-based model, and/or optionally, a number of re-training cycles.

12. A computer implemented method of any one of claims 1-11, wherein the operating instructions comprise machine readable instructions for controlling and/or monitoring production.

13. A computer program product comprising computer readable instructions that when executed on a computer cause the computer to execute the steps of any one of claims 1-12.

14. A computer-readable storage medium storing computer-readable instructions that when executed on a computer cause the computer to execute the steps of any one of claims 1-12.

15. A computer product comprising a computer readable token for accessing training plant based data and/or the trained or the pre-trained model of any one of claims 1-12.

# Fig. 1 Distributed production environment

# Fig. 2a Operating system of a distributed production environment

# Fig. 2b Operating system of a distributed production environment, training the model

Analytics engine (1004)

Plant historic data (1010)

Pre-processing engine (1009)

Training data

AI engine

Trained transformer-based model

Plant data (1005)

Plant(s) (1001)

# Fig. 2c Operating system of a distributed production environment, using the model

# Fig. 3 Pre-processing engine

Pre-processing engine (1009)

# Fig. 4 Plant data structure

# Fig. 5 Data structure from an operator

```
          ┌─────────────────┐
          │    Operator      │
          │   data (1012)    │
          └─────────────────┘
           ╱                ╲
    ┌──────────────┐   ┌──────────────────┐
    │ Text (or     │   │ Text (or audio)  │
    │ audio)       │   │ instructions     │
    │ instructions │   │ from the         │
    │ from the     │   │ operator and     │
    │ operator     │   │ plant-based      │
    └──────────────┘   │ data, e.g.,      │
                       │ data points      │
                       │ extracted from   │
                       │ pre-processing   │
                       │ engine (1009)    │
                       └──────────────────┘
```

# Fig. 6 Training a pre-trained transformer-based model

Training data (1013)
(based on plant data (1005))

AI engine

Pre-trained
transformer-based model

Following the steps of
training the model such
as in figs. 9-12 but using
plant-based training
data such as in figs. 3-5

Trained transformer-based
model for production

# Fig. 7 Contextualization of prompts

(7001) Prompting the AI engine
by providing a prompt such as a text prompt
(e.g., solve an anomaly in plant operation)

⬇

(7002) Adding a context to the prompt
(e.g., anomaly in temperature)

⬇

(7003) Optional: adding another context
(e.g., a data point from the pre-processing
engine such as an identification of a plant in
metadata, typical operating temperature of
the plant, and/or alike)

⬇

(7004) Generating by the AI engine instructions
for monitoring and/or controlling the production
based on the prompt (e.g., instructions for how
to solve the anomaly in temperature)

# Fig. 8 Re-training based on feedback score

Plant historic data (1010)

Pre-processing engine (1009)

Analytics engine (1004)

Training data

AI engine

Training the model

Plant data (1005)

Operator data

Input data

Trained transformer-based model

Machine readable instructions (1007)

Using the model

Control and/or monitoring engine (1006)

Feedback engine

Feedback score below threshold or a number of re-training cycles not reached, update training data, re-train the model

Feedback score above threshold or the number of re-training cycles reached, generate machine readable instructions (1008)

Plant(s) (1001)

Fig. 9 Training an embedding layer

# Fig. 10A Transformer encoder architecture

TRANSFORMER
ENCODER
ARCHITECTURE

SOFTMAX LAYER 218

LINEAR LAYER 216

ENCODER
OUTPUT
276

FURTHER ENCODER BLOCKS 214

LAYER NORMALIZATION 212

FEED FORWARD LAYER 210

ENCODER
BLOCK
274

LAYER NORMALIZATION 208

MULTI-HEAD SELF ATTENTION 206

POSITIONAL ENCODING 204

INPUT EMBEDDING 202

ENCODER
INPUT
278

# Fig. 10B Transformer decoder architecture

TRANSFORMER DECODER ARCHITECTURE

SOFTMAX LAYER 236

LINEAR LAYER 234

DECODER OUTPUT 282

FURTHER DECODER BLOCKS 232

LAYER NORMALIZATION 230

FEED FORWARD LAYER 228

LAYER NORMALIZATION 226

MASKED MULTI-HEAD SELF ATTENTION 224

DECODER BLOCK 280

POSITIONAL ENCODING 222

INPUT EMBEDDING 220

DECODER INPUT 284

# Fig. 10C Transformer encoder-decoder architecture

# Fig. 11 Training and/or deploying the transformer encoder, the transformer decoder and/or the transformer encoder-decoder

**Fig. 12 Input embedding**

TABLE 402

| COL 1 | COL 2 |
|-------|-------|
| 1 | 2 |
| 3 | 4 |

TEXT     TABULAR DATA

| | TEXT | | | | TABULAR DATA | | | | | | |
|---|---|---|---|---|---|---|---|---|---|---|---|
| TOKEN EMBEDDINGS | [S] | WHY | ? | [SEP] | COL | ##1 | COL | ##2 | 1 | 2 | 3 | 4 |
| POSITIONAL EMBEDDINGS | 0 | 1 | 2 | 3 | 4 | 5 | 6 | 7 | 8 | 9 | 10 | 11 |
| SEGMENT EMBEDDINGS | 0 | 0 | 0 | 0 | 1 | 1 | 1 | 1 | 1 | 1 | 1 | 1 |
| COLUMN EMBEDDINGS | 0 | 0 | 0 | 0 | 1 | 1 | 2 | 2 | 1 | 2 | 1 | 2 |
| ROW EMBEDDINGS | 0 | 0 | 0 | 0 | 1 | 1 | 1 | 1 | 1 | 1 | 2 | 2 |

Europäisches Patentamt

European Patent Office

Office européen des brevets

# EUROPEAN SEARCH REPORT

**Application Number**

EP 23 18 7792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 3 945 526 A1 (SAMSUNG ELECTRONICS CO LTD [KR]) 2 February 2022 (2022-02-02)<br>* paragraph [0042] - paragraph [0048] *<br>* paragraph [0054] * | 1,3-6,9,<br>10,12-15<br>2,7,8,11 | INV.<br>G05B13/02 |
| A | US 2023/214583 A1 (SAWYER SCOTT M [US] ET AL) 6 July 2023 (2023-07-06)<br>* paragraph [0045] - paragraph [0054] *<br>* paragraph [0070] - paragraph [0072] * | 1-15 | |
| A | EP 3 982 224 A1 (ABB SCHWEIZ AG [CH]) 13 April 2022 (2022-04-13)<br>* paragraph [0016] - paragraph [0018] *<br>* paragraph [0024] - paragraph [0025] *<br>* paragraph [0030] - paragraph [0031] *<br>* paragraph [0038] * | 1-15 | |

**TECHNICAL FIELDS SEARCHED (IPC)**

G05B

The present search report has been drawn up for all claims

| Place of search | Date of completion of the search | Examiner |
|---|---|---|
| The Hague | 8 January 2024 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 7792**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-01-2024**

| Patent document cited in search report | | Publication date | Patent family member(s) | | Publication date |
|---|---|---|---|---|---|
| EP 3945526 | A1 | 02-02-2022 | CN | 114093430 A | 25-02-2022 |
| | | | EP | 3945526 A1 | 02-02-2022 |
| | | | JP | 2022027571 A | 10-02-2022 |
| | | | US | 2022036182 A1 | 03-02-2022 |
| US 2023214583 | A1 | 06-07-2023 | NONE | | |
| EP 3982224 | A1 | 13-04-2022 | CA | 3194059 A1 | 14-04-2022 |
| | | | CN | 116438493 A | 14-07-2023 |
| | | | EP | 3982224 A1 | 13-04-2022 |
| | | | US | 2023244218 A1 | 03-08-2023 |
| | | | WO | 2022073981 A1 | 14-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020165045 A1
- WO 2021116123 A1

- WO 2021156157 A1

**Non-patent literature cited in the description**

- **VASWANI et al.** Attention Is All You Need. *31st Conference on Neural Information Processing Systems (NIPS 2017), Long Beach, CA, USA*, 06 December 2017